(19) Europäisches Patentamt
European Patent Office
Office européen des brevets

(11) EP 1 561 728 B1

(12) **EUROPÄISCHE PATENTSCHRIFT**

(45) Veröffentlichungstag und Bekanntmachung des Hinweises auf die Patenterteilung:
**13.12.2006 Patentblatt 2006/50**

(51) Int Cl.:
*C01B 33/193* (2006.01) *C09C 1/30* (2006.01)
*B01D 19/04* (2006.01)

(21) Anmeldenummer: **04107018.6**

(22) Anmeldetag: **28.12.2004**

(54) **Hydrophobe Fällungskieselsäure für Entschäumerformulierungen**

Hydrophobic precipitated silica for defoaming compositions

Silice de précipitation hydrophobe pour les compositions démoussantes

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **03.02.2004 DE 102004005411**

(43) Veröffentlichungstag der Anmeldung:
**10.08.2005 Patentblatt 2005/32**

(73) Patentinhaber: **Degussa AG**
**40474 Düsseldorf (DE)**

(72) Erfinder:
- **Panz, Christian**
  **50389, Wesseling (DE)**
- **Allerdisse, Rene**
  **50999, Köln (DE)**
- **Obladen, Helga**
  **50321, Brühl (DE)**
- **Löbbus, Mario**
  **63739, Aschaffenburg (DE)**
- **Lukas, Anja**
  **63456, Hanau (DE)**
- **Bergmann, Roland**
  **63538, Grosskrotzenburg (DE)**
- **Meier, Karl**
  **53347, Alfter (DE)**

(56) Entgegenhaltungen:
**EP-A- 1 018 354** **WO-A-03/014020**
**US-A- 3 714 068**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft hydrophobe Fällungskieselsäuren mit hohem pH-Wert und niedriger Silanolgruppendichte, ein Verfahren zu deren Herstellung sowie deren Verwendung.

Hydrophobe Fällungskieselsäuren sowie Verfahren zu deren Herstellung sind bekannt. Die Hydrophobierung erfolgt dabei in der Regel durch eine Belegung der Oberfläche einer hydrophilen Fällungskieselsäure mit geeigneten organischen Verbindungen. Beispiele solcher hydrophober oder teilweise hydrophober Fällungskieselsäuren sind in den Patentschriften EP 0 798 348, US 4 377 493 und EP 1 281 735 offenbart. EP 1 281 733 und EP 1 281 735 offenbaren hydrophobe Fällungskieselsäuren mit pH-Werten von 5 - 9, WO 2003014020 hingegen solche mit pH-Werten größer 9,5.

Die Verwendung von hydrophilen und hydrophoben Fällungskieselsäuren in Entschäumerformulierungen ist ebenfalls bekannt (Schriftenreihe Pigmente, Nr. 42, Fa. DEGUSSA, 06/1986). Die Verwendung in Entschäumerformulierungen stellt an die eingesetzten Fällungskieselsäuren hohe Anforderungen. So sollten sie leicht und gut in die Entschäumerformulierung dispergierbar sein, zu einer raschen Knock-Down-Zeit (Ansprechzeit), vollständigem Knock-Down (Soforteffekt) und langem Hold-Down (Standzeit) führen. Die Kenngröße "Knock-Down" beschreibt die Fähigkeit des Entschäumers, die Schaumhöhe sofort nach Zugabe bis zu einer bestimmten Schaumhöhe zu verringern. Der Hold-Down charakterisiert die Standzeit des Entschäumers, d. h. die Dauer der Wirksamkeit. Konkret wird die Zeit gemessen, bis ein bestimmtes Schaumniveau wieder erlangt wird. Daneben charakterisiert die Knock-Down-Zeit die Zeitdauer, die bis zum Erreichen des Knock-Down bezogen auf das Schaummaximum vergeht. Fällungskieselsäuren aus dem Stand der Technik weisen für die genannten Parameter oder zumindest einige der genannten Parameter unbefriedigende Werte auf

Aufgabe der vorliegenden Erfindung war es daher, Fällungskieselsäuren bereitzustellen, die verbesserte anwendungstechnische Eigenschaften, insbesondere in Entschämerformulierungen aufweisen. Ferner soll ein Verfahren bereitgestellt werden, mit dem die erfindungsgemäßen Fällungskieselsäuren hergestellt werden können.

Überraschenderweise wurde gefunden, dass diese Aufgabe durch die in der nachfolgenden Beschreibung sowie den Ansprüchen und den Beispielen näher definierten erfindungsgemäßen Kieselsäuren sowie das in der Beschreibung, den Beispielen und den Ansprüchen näher beschriebene Verfahren gelöst wird.

Gegenstand der vorliegenden Erfindung sind hydrophobe, alkalische Fällungskieselsäuren, gekennzeichnet durch die folgenden physikalisch-chemischen Parameter:

| | |
|---|---|
| BET | < 110 $m^2/g$ |
| CTAB | < 150 $m^2/g$ |
| BET/CTAB-Verhältnis | < 3 |
| Kohlenstoffgehalt | > 3,1 % |
| pH-Wert | > 9 |

Gegenstand der Erfindung sind auch hydrophobe Fällungskieselsäuren die neben den genannten Parametern, unabhängig voneinander, einen oder mehrere der folgenden physikalisch-chemischen Parameter aufweisen:

| | |
|---|---|
| DBP | < 230 g/(100g) |
| Mod. Sears-Zahl | < 6 ml/(5g) |
| Sears-Zahl/BET-Verhältnis | < 0,05 ml/(5$m^2$) |
| Methanolbenetzbarkeit | > 50 % |
| Mittlere Partikelgröße $d_{50}$ | < 14 μm |
| Glühverlust | > 3% |
| Stampfdichte | < 150 g/l |

Gegenstand der vorliegenden Erfindung ist zudem ein Verfahren, mit dem die erfindungsgemäßen Fällungskieselsäuren hergestellt werden können, umfassend die nachfolgenden Schritte:

a) Fällung einer Fällungskieselsäure,
b) Filtration,
c) Verflüssigung des Filterkuchens durch Zugabe von Wasser,
d) Trocknung der Suspension,
h) Durchführung einer Temperung bei über 150 °C und
i) Vermahlung der hydrophoben Fällungskieselsäure,
dadurch gekennzeichnet, dass ein Schritt

e) Alkalisierung der Fällungskieselsäure durch Zugabe von zumindest einem basischen Mittel
durchgeführt wird und dass ein Schritt
f) Herstellung einer Mischung aus zumindest einem Hydrophobierungsmittel und einer Fällungskieselsäure, einer Fällungskieselsäuredispersion oder eines Fällungskieselsäurefilterkuchens
und optional ein Schritt
g) Konditionierung bei 10 °C bis 150 °C für einen Zeitraum von 0,5 bis 72 h,

umfasst sind. Die Schritte e), f) und g) können zu verschiedenen Zeitpunkten im erfindungsgemäßen Verfahren durchgeführt werden.

Weiterhin Gegenstand der Erfindung ist die Verwendung der erfindungsgemäßen Fällungskieselsäuren, insbesondere in Entschäumerformulierungen.

Die Erfinder haben erkannt, dass Fällungskieselsäuren, die für den Einsatz in Entschäumerformulierungen besonders gut geeignet sind, so beschaffen sein müssen, dass sie sich optimal an der Grenzfläche zwischen Öl und Wasser einlagern. Nur dann ist es möglich, die Schaumblasen effektiv zu zerstören. Es erwies sich als entscheidend, dass die Oberfläche der Fällungskieselsäuren eine optimale Mischung aus hydrophilen und hydrophoben Eigenschaften in sich vereinen. Die hydrophilen Zentren der Kieselsäureoberfläche werden durch die Einstellung des pH-Wertes kontrolliert. Je höher der pH-Wert im Endprodukt ist, um so ausgeprägter sind die für die Entschäumeranwendung notwendigen hydrophilen Zentren an der Kieselsäureoberfläche. Hydrophile Zentren können jedoch nur dort auf der Fällungskieselsäureoberfläche entstehen, wo vor der Behandlung mit der basischen Komponente Silanolgruppen vorhanden waren. Um den hydrophilen Charakter der Kieselsäure nicht zu stark auszuprägen, ist es wichtig, dass die erfindungsgemäßen Fällungskieselsäuren eine geringe Silanolgruppendichte aufweisen. Diese Silanolgruppendichte kann durch das Sears-Zahl/BET-Verhältnis ausgedrückt werden. Die erfindungsgemäßen Fällungskieselsäuren zeichnen sich daher durch einen hohen pH-Wert und eine niedrige Silanolgruppendichte aus.

Es zeigte sich außerdem, daß hydrophobe Fällungskieselsäuren mit längeren Polysiloxanketten an der Oberflächen besonders gute Entschäumerleistungen aufweisen. Als Maßstab kann hier das Verhältnis von BET- zu CTAB-Oberfläche herangezogen werden.

Die erfindungsgemäßen Fällungskieselsäuren zeichnen sich zudem durch eine optimierte Teilchengröße aus. Die Teilchengröße spielt eine wichtige Rolle, da die Kieselsäureteilchen einerseits ausreichend groß sein müssen um die Schaumlamelle zu brechen, anderseits aber auch in ausreichender Zahl vorhanden sein müssen.

Die erfindungsgemäßen hydrophoben Fällungskieselsäuren zeichnen sich neben dem hohen pH-Wert und der niedrigen Silanolgruppendichte durch:

- einen hohen Kohlenstoffgehalt (> 3,1 %)
- eine sehr homogene Hydrophobierung, das heißt eine steile Methanoibenetzbarkeitskurve
- eine hohe Methanolbenetzbarkeit (> 50 %)

aus. Sie eignen sich daher hervorragend als Entschäumerkomponente in Entschämerformulierungen. Insbesondere sorgen sie für eine kurze Knock-Down-Zeit, einen annähernd vollständigen Knock-Down und einen langen Hold-Down. Ferner lassen sich die erfindungsgemäßen Fällungskieselsäuren besonders leicht und homogen in Entschämerformulierungen einarbeiten.

Die Gegenstände der vorliegenden Erfindung werden nachfolgend im Detail beschrieben.

Die erfindungsgemäßen Fällungskieselsäuren weisen die folgenden physikalisch-chemischen Parameter:

| | |
|---|---|
| BET | < 110 $m^2/g$ |
| CTAB | < 150 $m^2/g$ |
| BET/CTAB-Verhältnis | < 3 |
| Kohlenstoffgehalt | > 3,1 % |
| pH-Wert | > 9 |

auf. Ferner können Sie optional, unabhängig voneinander einen oder mehrere der folgenden physikalisch-chemischen Parameter aufweisen:

| | |
|---|---|
| DBP | < 230 g/(100g) |
| Mod. Sears-Zahl | < 6 ml/(5g) |
| Sears-Zahl/BET-Verhältnis | < 0,05 ml/(5$m^2$) |
| Methanolbenetzbarkeit | > 50 % |

(fortgesetzt)

| | |
|---|---|
| Mittlere Partikelgröße $d_{50}$ | < 14 μm |
| Glühverlust | > 3% |
| Stampfdichte | < 150 g/l |

Die erfindungsgemäßen Fällungskieselsäuren weisen bevorzugt eine BET von 30 - 110 $m^2/g$, besonders bevorzugt von 40 - 80 $m^2/g$, eine CTAB von 30 - 120 $m^2/g$, besonders bevorzugt 50 - 90 $m^2/g$ und eine modifizierte Searszahl von 0,3 - 6,0 ml, besonders bevorzugt von 0,5 - 2,0 ml.
Der Kohlenstoffgehalt, der ein wesentliches Maß zur Beurteilung der Hydrophobie einer Fällungskieselsäure ist, liegt bevorzugt bei 4 - 12 %, besonders bevorzugt bei 5 - 10 % und ganz besonders bevorzugt bei 6 - 10 %. Die Methanolbenetzbarkeit bevorzugt bei > 60 %.

Durch Zugabe eines basischen Mittels während der Herstellung der Fällungskieselsäuren wird der pH-Wert der trockenen Kieselsäure eingestellt. Je höher der pH-Wert im Endprodukt ist, um so ausgeprägter sind die für die Entschäumeranwendung notwendige hydrophilen Zentren an der Kieselsäureoberfläche. Daher liegt der pH-Wert der erfindungsgemäßen Kieselsäure vorzugsweise zwischen 9 - 10,5, insbesondere zwischen 9 und 10.

Hydrophile Zentren können auf der Kieselsäureoberfläche nur dort entstehen, wo vor der Behandlung mit dem basischen Mittel Silanolgruppen vorhanden waren. Um den hydrophilen Charakter der Kieselsäure nicht zu stark auszuprägen, ist es wichtig, dass die erfindungsgemäße Fällungskieselsäure eine geringe Silanolgruppendichte aufweist. Diese Silanolgruppendichte kann durch das Sears-Zahl/BET-Verhältnis ausgedrückt werden. Im Besonderen können die erfindungsgemäßen Fällungskieselsäuren ein Sears-Zahl/BET-Verhältnis von < 0,04 $ml/(5m^2)$, vorzugsweise < 0,03 $ml/(5m^2)$, in einer besonderen Ausführungsform von < 0,025 $ml/(5m^2)$ aufweisen.

Das BET/CTAB-Verhältnis der erfindungsgemäßen Fällungskieselsäuren liegt bevorzugt bei < 1,5, besonders bevorzugt bei < 1 und ganz besonders bevorzugt bei 0,5 - 0,99. Die mittlere Partikelgröße $d_{50}$, die die Voraussetzung für eine gute und homogene Einarbeitung in die Entschäumerformulierung ist, liegt bevorzugt bei < 10 μm, besonders bevorzugt bei < 7,5 μm, ganz besonders bevorzugt bei < 6 μm und insbesondere bei < 5 μm.

Alle genannten Vorzugsbereiche können unabhängig voneinander eingestellt werden.

Die erfindungsgemäßen Fällungskieselsäuren können nach einem Verfahren, umfassend die Schritte

a) Fällung einer Fällungskieselsäure,
b) Filtration,
c) Verflüssigung des Filterkuchens durch Zugabe von Wasser,
d) Trocknung der Suspension,
h) Durchführung einer Temperung bei über 150 °C und
i) Vermahlung der hydrophoben Fällungskieselsäure,
dadurch gekennzeichnet, dass ein Schritt
e) Alkalisierung der Fällungskieselsäure durch Zugabe von zumindest einem basischen Mittel
durchgeführt wird,
und zudem die Fällungskieselsäure in Schritt
f) Herstellung einer Mischung aus zumindest einem Hydrophobierungsmittel und einer Fällungskieselsäure, einer Fällungskieselsäuredispersion oder eines Fällungskieselsäurefilterkuchens
mit einem Hydrophobierungsmittel belegt wird, hergestellt werden.
Optional kann dass erfindungsgemäße Verfahren einen Schritt
g) Konditionierung bei 10 °C bis 150 °C für einen Zeitraum von 0,5 bis 72 h,

enthalten. Die Schritte e), f) und g) können zu verschiedenen Zeitpunkten im erfindungsgemäßen Verfahren durchgeführt werden. Im nachfolgenden Text wird darauf im Detail eingegangen.

Die nach Schritt g) erhaltene, konditionierte Fällungskieselsäure kann entweder Schritt h) zugeführt oder mit einer hydrophilen Fällungskieselsäure oder Fällungskieselsäuredispersion oder einem Fällungskieselsäurefilterkuchen vermischt, gegebenenfalls gemäß Schritt d) getrocknet und gegebenenfalls erneut gemäß Schritt g) konditioniert werden. Dies wird so lange wiederholt, bis die hydrophobierte Fällungskieselsäure schließlich Schritt h) zugeführt und abschließend in Schritt i) vermahlen wird.

Schritt a) des erfindungsgemäßen Verfahrens erfolgt bevorzugt derart, dass dabei die Schritte

aa) Aufheizen einer Vorlage aus Wasser oder Wasser mit Wasserglas vermischt auf eine Temperatur zwischen 60 und 100 °C, bevorzugt 70 °C bis 90 °C
ab) Simultane Zugabe von Wasserglas und Säure in die Vorlage

ac) Erniedrigung des pH-Wertes durch Zugabe eines Säuerungsmittels

durchgeführt werden.

Die simultane Zugabe von Wasserglas und Säurungsmittel in Schritt ab) erfolgt bevorzugt derart, dass der pH-Wert auf einem Wert zwischen 7 und 11, bevorzugt 8 bis 9 gehalten wird. Die Messung des pH-Wertes erfolgt dabei bei 60 °C. Die Temperatur der Reaktionslösung wird in Schritt ab) auf einem Wert zwischen 60 und 100 °C, bevorzugt zwischen 65 und 95 °C, besonders bevorzugt zwischen 70 und 90 °C gehalten. Die Zugabe von Säurungsmittel und Wasserglas wird bis zu einem Feststoffgehalt von 40 bis 70 g/l, bevorzugt 45 bis 65 g/l, besonders bevorzugt 50 bis 60 g/l fortgeführt und dann gestoppt. Somit ergibt sich eine Fällzeit von 70 bis 140 min, bevorzugt 80 bis 130 min.

In Schritt ac) wird der pH-Wert der Fällsuspension durch Zugabe eines Säuerungsmittels auf einem Wert von 2 bis 8, bevorzugt von 2,5 bis 4,0, besonders bevorzugt von 3 bis 4 eingestellt. Die Messung des pH-Wertes erfolgt bei 60 °C. Durch die hier beschriebene Prozessführung während der Fällung wird eine geringe Silanolgruppendichte auf der Oberfläche der Fällungskieselsäure eingestellt.

Das in Schritt ab) eingesetzte Wasserglas weist ein Modul von 3 bis 3,8, bevorzugt von 3,3 bis 3,5 und eine Dichte von 1,1 bis 1,39 g/ml, bevorzugt 1,2 bis 1,36 g/ml, besonders bevorzugt 1,3 - 1,4 g/ml auf.
Das in den Schritten ab) und ac) eingesetzte Säurungsmittel kann eine Mineralsäure, insbesondere Schwefelsäure, Salzsäure, Phosphorsäure, Salpetersäure oder Kohlensäure oder Kohlendioxid sein. Bevorzugt wird Schwefelsäure mit einer Konzentration von 1 mol/l bis 18,76 mol/l und bevorzugt von 7,0 bis 18,8 mol/l. Vorzugsweise werden in den Schritten ab) und ac) die gleichen Säurungsmittel verwendet.

Nach Schritt ac) kann gegebenenfalls ein Schritt
ad) Reifung der Fällsuspension bei 10 °C bis 95 °C, bevorzugt von 40°C bis 60 °C, für 0 bis 72 Stunden, bevorzugt für 0 bis 12 Stunden, durchgeführt werden.

In Schritt b) wird die Fällungssuspension filtriert und der Filterkuchen gewaschen. Die Filtration der zuvor hergestellten Fällsuspension und das Waschen des Filterkuchens werden mit bekannten Verfahren, wie z. B. durch eine Filtration mit einer Membranfilterpresse durchgeführt (Ullmann's Encyclopedia of industrial chemistry, 1992, 5th edition, vol. B1, page 10-1 - 10-59). Zum Waschen des Filterkuchens wird bevorzugt deionisiertes Wasser verwendet. Der erhaltene Filterkuchen weist einen Feststoffgehalt von 13 bis 25 %, bevorzugt von 15 bis 17 % auf.

In Schritt c) wird der Filterkuchen verflüssigt. In einer ersten Ausführungsform des erfindungsgemäßen Verfahrens wird der Filterkuchen dabei durch Zugabe von Wasser, bevorzugt deionisiertem Wasser und unter Rühren, verflüssigt.

In einer zweiten Ausführungsform wird der Schritt c) zusammen mit Schritt e) durchgeführt. D. h. die Verflüssigung des Filterkuchens erfolgt unter Zugabe von Wasser, bevorzugt deionisiertem Wasser, und unter Rühren. Durch gleichzeitige (Schritte: c) + e)) oder anschließende Zugabe (Schritte: c) -> e)), einer oder mehrerer basischer Komponenten wird der pH-Wert der Suspension auf 7 - 11, günstigerweise auf 8 - 10,5 , vorzugsweise 8,3 - 10 eingestellt.

Unabhängig von der Ausführungsform des Schrittes c) weist die erhaltene Suspension einen Feststoffgehalt von 6 bis 20 %, bevorzugt von 6 bis 17 %, besonders bevorzugt von 6 bis 11 % auf. In beiden Ausführungsformen kann es notwendig sein, dass die Verflüssigung unter Einwirkung von moderater Scherenergie erfolgt. Dabei soll nur so viel Scherenergie eingetragen werden, wie man gerade eben zur Verflüssigung benötigt.

Die aus den vorherigen Verfahrensstufen erhaltene Suspension wird in Schritt d) getrocknet. Hierzu sind dem Fachmann vielerlei Trocknungsmethoden bekannt (Ullmann's Encyclopedia of industrial chemistry, 1992, 5th edition, vol. B1, page 7-21 - 7-25). Als vorteilhaft haben sich Trocknungen mittels Stromtrockner, Sprühtrockner, Etagentrockner, Bandtrockner, Drehrohrtrockner, Flash-Trockner, Spin-Flash-Trockner oder Düsenturm erwiesen. Besonders bevorzugt erfolgt die Trocknung mittels Sprühtrockner oder Düsenturm. Je nach dem, in welcher Ausführungsform Schritt f) ausgeführt werden soll, kann der Feuchtegehalt der Fällungskieselsäure in Schritt d) eingestellt werden.

Falls die Verflüssigung des Filterkuchens in Schritt c) gemäß Ausführungsform 1, d. h. ohne Zugabe eines basischen Mittels erfolgt, so wird die basische Komponente nach der Trocknung in einem Mischaggregat (z. B. niedrigscherende Pflugscharmischer wie z. B. Lödigemischer) auf die Fällungskieselsäure aufgesprüht. In diesem Fall erfolgt Schritt e) also nach Schritt d). Der pH-Wert der Fällungskieselsäure wird in diesem Fall auf einen Wert $> 7$, bevorzugt zwischen 7 und11, besonders bevorzugt zwischen 8 und 10,5 und insbesondere zwischen 8,3 und 10 eingestellt.

Als basisches Mittel können in Schritt e) Alkalihydroxide oder -carbonate, Erdalkalihydroxide oder -carbonate, Alkalioxide, Erdalkalioxide, Alkalisilicate, Erdalkalisilicate, Ammoniak und Alkalialuminate oder wässrige Lösungen oder Gemische besagter Basen eingesetzt werden. Bevorzugt wird Natron- und Kalilauge verwendet.

Es ist auch möglich, ein basisches Mittel sowohl während Schritt c) als auch nach Schritt d) zuzugeben. Dabei können die o. g. basischen Komponenten eingesetzt werden.

Verfahrensschritt f) des erfindungsgemäßen Verfahrens kann als Naß - oder Trockenhydrophobierung durchgeführt werden. Nasshydrophobierung bedeutet, dass es sich bei den silikatischen Edukten um wässrige Kieselsäuresuspensionen oder stark wasserhaltige Kieselsäurefilterkuchen handelt, die mit den entsprechenden Hydrophobierungsmitteln belegt werden, wie es z. B. in DE 27 29 244 für Fällungssuspensionen mit Organohalogensilanen beschrieben

wird. Trockenhydrophobierung bedeutet, dass es sich bei den silikatischen Edukten um Kieselsäurepulver mit verschiedenen Feuchtigkeitsgehalten von 1 bis 75% handelt, die mit den entsprechenden Hydrophobierungsmitteln belegt werden. Ein solches Verfahren wird z. B. in DE 26 28 975 beschrieben. Auf die Lehren der DE 26 28 975 und der DE 27 29 244 wird in dieser Anmeldung ausdrücklich Bezug genommen.

Schritt f) des erfindungsgemäßen Verfahrens kann in den folgenden Varianten durchgeführt werden:

Variante 1:

Die Zugabe des Hydrophobierungsmittels erfolgt auf eine Fällungskieselsäure mit einem Wassergehalt von 1,0 bis 80 Gew.-%, bevorzugt 2 bis 50 Gew.-%. Der Wassergehalt kann bei der Trocknung in Schritt d) oder falls die Zugabe des basischen Mittels (Schritt e) erst nach Schritt d) erfolgt, gegebenenfalls durch eine weitere Trocknung oder Anfeuchtung eingestellt werden. In diesem Fall sind folgende Verfahrensabläufe möglich: c) + e) -> d) -> f) oder c) -> e) -> d) -> f) oder c) -> d) -> e) -> f).

Variante 2:

Schritt f) wird zwischen Schritt a) und b) durchgeführt. D. h. die Zugabe des Hydrophobierungsmittels erfolgt nach erfolgter Fällung von Silikat mit einer Säure in die resultierende Dispersion der Fällungskieselsäure. Bei dieser Ausführungsform kann zum Beispiel ein Rhein-Hütte-Mischer oder eine Kolthof-Mischsirene oder ein Ultra-Turrax verwendet werden. Diese Variante erfordert eine rasche Filtration bzw. eine Kurzzeit-Trocknung (Spin-Flash-Trockner, Sprühtrockner, Düsenturm) nach der Umsetzung.

Variante 3:

In diesem Fall erfolgt die Zugabe des Hydrophobierungsmittels zu einer Fällungskieselsäure mit einem Wassergehalt von 70 bis 99 Gew.-% bei anschließender Trennung des Feststoffs vom Wasser. Das Anheben des Feststoffgehaltes kann durch Filtration, Düsenturm, Spin-Flash oder eine sonstige Kurzzeit-Trocknung erfolgen. Je höher der Wassergehalt, desto rascher sollte die Anhebung des Feststoffgehaltes durchgeführt werden , um eine Entmischung zu vermeiden. In diesem Fall sind folgende Verfahrensabläufe möglich: c) + e) -> f) und sofort-> d) oder c) -> e) -> f) und sofort -> d) oder c) + f) und sofort -> e) und sofort -> d) oder c) -> f) und sofort -> e) und sofort-> d) oder c) -> e) + f) und sofort-> d).
Es ist zum Beispiel auch möglich, den Filterkuchen mit dem Hydrophobierungsmittel zu mischen.

Variante 4:

Schritt f) erfolgt zusammen mit Schritt d) bzw. unmittelbar vor d). In diesem Fall kann die Fällungs- bzw. wasserhaltige Kieselsäure z. B. gleichzeitig mit dem Hydrophobierungsmittel einem Sprüh-, Düsenturm- oder Spin-Flash-Trockner zugeführt werden. In diesem Fall sind folgende Verfahrensabläufe möglich: c) + e) -> f und dann sofort ->d) , c) -> d) + f) -> e) oder c) + e) -> d) + f) oder c) -> e) -> d) + f) oder e) + f) + d).
Im Falle der Spin-Flash-Trocknung ist der Schritt c) optional und kann daher auch ganz entfallen.
Im Fall der Spin-Flash-Trocknung kann der Filterkuchen vor der Trocknung mit dem basischen Mittel und dem Hydrophobierungsmittel gemischt und dann getrocknet werden d. h. e) + f) -> d).

Variante 5:

In diesem Fall erfolgt ein Mischen von trockener Fällungskieselsäure mit dem Hydrophobierungsmittel z. B. in einem Gericke- oder Lödige-Mischer. Folgende Verfahrensabläufe sind möglich: c) + e) -> d) -> f) oder c) -> e) -> d) -> f) oder c) -> d) -> f) -> e). Das Mischen von trockener Fällungskieselsäure mit dem Hydrophobierungsmittel ist auch bei der Vermahlung (Schritt i)) in der Mühle möglich.

Die in den Varianten 1 bis 5 dargestellten Verfahrensabläufe spiegeln Ausschnitte aus dem gesamten Herstellungsprozeß wieder. Mit Ausnahme der Variante 2 werden in allen Varianten zunächst die Schritte a) und b) durchgeführt. Anschließend folgt Schritt c). Werden zwei Verfahrensschritte durch ein "+" Zeichen verbunden (z. B. c) + e)) so bedeutet dies, dass die beiden Verfahrensschritte zusammen durchgeführt werden. Werden die Verfahrensschritte hingegen durch ein "->" verbunden (z. B. c) -> e)) so bedeutet dies, dass die Verfahrensschritte nacheinander durchgeführt werden.
Nach dem jeweils letzten angegebenen Verfahrensschritt folgen noch die in der allgemeinen Verfahrensbeschreibung mit den Buchstaben h) und i) und ggf. g) gekennzeichneten Verfahrensschritte. Bei Variante 2 erfolgen nach Schritt b) noch die Schritte c) - i), wobei g) optional ist.

Das erfindungsgemäße Verfahren umfaßt sowohl Varianten, bei denen Schritt f) derart durchgeführt wird, dass

das Hydrophobierungsmittel mit einer bereits alkalisierten Fällungskieselsäure vermischt wird, als auch Varianten, bei denen die Zugabe des Hydrophobierungsmittels vor oder gleichzeitig mit Schritt e), d. h. der Zugabe des Alkalisierungsmittels, erfolgt. Bevorzugt sind die Varianten, bei denen die Zugabe des Hydrophobierungsmittels auf die pulverförmige, bereits alkalisierte Fällungskieselsäure erfolgt.

Vorzugsweise werden die Varianten 1 und 5 durchgeführt. Besonders bevorzugt ist die Variante 1. Ganz besonders bevorzugt wird die Variante 1 derart durchgeführt, dass Schritte in der Abfolge c) + e) -> d) -> f) oder c) -> e) -> d) -> f) oder c) -> d) -> e) -> f) durchgeführt werden.

Als Hydrophobierungsmittel werden Organopolysiloxanderivate eingesetzt; es können jedoch auch andere Siliziumverbindungen verwendet werden, die unter den gewählten Reaktionsbedingungen zu Organopolysiloxanen reagieren (z. B. Dichlordimethylsilan in wässriger Umgebung).

Als Hydrophobierungsreagenzien dienen Organopolysiloxanderivate oder deren Vorstufen, z. B. der Zusammensetzung $R_{4-n}SiX_n$ (mit n = 1, 2, 3), $[SiR_xX_yO]_z$ (mit $0 \le x \le 2$, $0 \le y \le 2$, $3 \le z \le 10$ mit x + y = 2), $[SiR_xX_yN]_z$ (mit $0 \le x \le 2$, $0 \le y \le 2$, $3 \le z \le 10$ mit x + y = 2), $SiR_nX_mOSiR_oX_p$ (mit $0 \le n \le 3{,}0 \le m \le 3{,}0 \le 0 \le 3{,}0 \le p \le 3$, mit n + m =3, o + p = 3), $SiR_nX_mNSiR_oX_p$ (mit $0 \le n \le 3$, $0 \le m \le 3$, $0 \le o \le 3$, $0 \le p \le 3$, mit n + m = 3, o + p = 3), $SiR_nX_m$ $[SiR_xX_yO]_zSiR_oX_p$ (mit $0 \le n \le 3$, $0 \le m \le 3$, $0 \le x \le 2$, $0 \le y \le 2$, $0 \le o \le 3$, $0 \le p \le 3$, $1 \le z \le 10000$mitn+ m = 3, x + y = 2, o + p = 3) verwenden. Bei diesen Verbindungen kann es sich um lineare, cyclische und verzweigte Silan-, Silazan und Siloxanverbindungen handeln. Bei R kann es sich um Alkyl und/oder Arylreste handeln, welche mit funktionellen Gruppen wie der Hydroxygruppe, der Aminogruppe, Polyethern wie Ethylenoxid und/oder Propylenoxid und Halogenidgruppen wie Fluorid substituiert sein können. R kann auch Gruppen wie Hydroxy-, Amino-, Halogenid-, Alkoxy-, Alkenyl-, Alkinyl- und Aryl-Gruppen und schwefelhaltige Gruppen enthalten. Bei X kann es sich um reaktive Gruppen wie Hydroxy-, Silanol-, Amino-, Mercapto-, Halogenid-, Alkoxy-, Alkenyl- und Hydridgruppen handeln. Bevorzugt werden lineare Polysiloxane der Zusammensetzung $SiR_nX_m[SiR_xX_yO]_zSiR_oX_p$ (mit $0 \le n \le 3$, $0 \le m \le 3$, $0 \le x \le 2$, $0 \le y \le 2{,}0 \le o \le 3{,}0 \le p \le 3$, $1 \le z \le 10000$ mit n + m = 3, x + y = 2, o + p = 3) verwendet, bei welchen R bevorzugt durch Methyl repräsentiert wird.

Besonders bevorzugt werden Polysiloxane der Zusammensetzung $SiR_nX_m[SiR_xX_yO]_zSiR_oX_p$ (mit $0 \le n \le 3$, $0 \le m \le 1$ , $0 \le x \le 2$, $0 \le y \le 2$, $0 \le o \le 3$, $0 \le p \le 1$, $1 \le z \le 1000$ mit n + m = 3, x + y = 2, o + p = 3) verwendet, bei welchen R bevorzugt durch Methyl repräsentiert wird. Aufgrund des gewählten, erfindungsgemäßen Verfahrens lassen sich aber speziell auch schwerflüchtige Polysiloxane einsetzten, die keine funktionellen Gruppen aufweisen. Durch das Vorhandensein bestimmter funktioneller Gruppen in Organopolysiloxanderivaten können Salze oder niedermolekulare Stoffe wie $NH_3$, Amine, Alkohole etc. entstehen, welche zu störenden Verunreinigungen führen können. Eine wichtige Ausnahme stellen hier silanolfunktionalisierte Polysiloxane dar, da hier als Verunreinigung lediglich Wasser entsteht, das unter den gewählten Prozeßbedingungen leicht entfernbar ist.

Bevorzugt kann es sich bei dem Hydrophobierungsmittel um ein methylterminiertes Polydimethylsiloxan, insbesondere eines mit einer Viskosität von 5 - 100 mPa s, 10 - 100 mPa s, 30 - 100 mPa s, bevorzugt 40 - 60 mPa s, handeln. Ein geeignetes Polysiloxanöl ist z. B. DOW CORNING (R) 200 FLUID 50 CS.

Optional kann im erfindungsgemäßen Verfahren ein Schritt g) durchgeführt werden. Schritt g) wird mit Mischungen der Fällungskieselsäure und des Hydrophobierungsmittels oder mit Fällungskieselsäuren, die bereits mit dem Hydrophobierungsmittel belegt sind, durchgeführt. Dabei erfolgt eine Wärmebehandlung der mit dem Hydrophobierungsmittel belegten oder vermischten Fällungskieselsäure bei einer Temperatur von 10 bis 150 °C, bevorzugt von 100 bis 150 °C, besonders bevorzugt bei 105 °C bis 110 °C. Schritt g) wird so lange durchgeführt, bis ein Material entstanden ist, das zwar wasserbenetzbar ist, bei dem sich jedoch Kieselsäure und Silikonöl beim Eintrag in Wasser nicht mehr voneinander trennen. Somit erfolgt die Konditionierung in Schritt g) in der Regel für einen Zeitraum von 0,5 bis 72 Stunden, bevorzugt 0,5 bis 2 Stunden. In einer bevorzugten Ausführungsform wird bei 100 bis 150 °C für 0,5 bis 2 Stunden konditioniert.

Erfolgt nach Schritt g) unmittelbar Schritt h), so wird eine Methanolbenetzbarkeit > 20 % bevorzugt. Wird Schritt g) jedoch nicht direkt vor Schritt h) durchgeführt, so soll die Methanolbenetzbarkeit bei < 20 % liegen.

Üblicherweise wird Schritt g) nach Schritt d), wobei gegebenenfalls die Schritte e) und f) oder auch nur e) oder nur f) zwischen den Schritten d) und g) erfolgen können, durchgeführt. Folgende Ausführungsformen sind bevorzugt: c) + e) -> d) -> f) -> g) oder c) -> e) -> d) -> f) -> g) oder c) -> d) -> e) -> f) -> g) oder c) + e) -> f) -> d) -> g) oder c) -> e) -> f) -> d) -> g) oder c) + f) -> e) -> d) -> g) oder c) -> f) -> e) -> d) -> g) oder c) -> e) + f) -> d) -> g).

Die Konditionierungszeit in Schritt g) beträgt 0,5 bis 72 Stunden, bevorzugt 0,5 bis 12 Stunden, besonders bevorzugt 0,5 bis 2 Stunden. Besonders bevorzugt liegt nach der Konditionierung eine teilhydrophobierte Kieselsäure mit einer Methanolbenetzbarkeit von 20 % und mehr vor.

Schritt f) des erfindungsgemäßen Verfahrens kann in einer Variante 6 derart durchgeführt werden, das eine bereits konditionierte Fällungskieselsäure nach Schritt g) mit einer hydrophilen Fällungskieselsäure vermischt wird. Dabei kann zunächst ein Masterbatch, d. h. eine konditionierte Fällungskieselsäure, erhalten nach Verfahrensschritten a) bis g), gemäß einer der oben genannten Ausführungsformen hergestellt und dieser anschließend mit einer (hydrophilen) bzw. wasserhaltigen Fällungskieselsäure gemischt werden.

Hierbei wird z. B. eine Basis-Kieselsäure nach Schritt d) oder e) im Massenverhältnis Hydrophobierungsmittel

zu Fällungskieselsäure von 3 : 1 bis 1 : 5, bevorzugt 1 : 1 bis 1 : 3 mit einem Hydrophobierungsmittel z. B. Silikonöl z. B. DOW CORNING (R) 200 FLUID 50 CS (Dimethylpolysiloxan 50 mPa s, mit Trimethylsilyl-Gruppen terminiert, Kohlenstoffgehalt ca. 33 %) belegt (Schritt f)). Das so entstandene Pulver wird danach über eine halbe Stunde bei einer Temperatur von über 100°C, bevorzugt von 100 bis 150 °C, besonders bevorzugt von 105 bis 110 °C konditioniert. Die Konditionierung (Schritt g) wird so lange durchgeführt, bis ein Material entstanden ist, das zwar wasserbenetzbar ist (Methanolbenetzbarkeit < 20 %), bei dem sich jedoch Kieselsäure und Silikonöl beim Eintrag in Wasser nicht mehr voneinander trennen.

Dieser Masterbatch wird anschließend mit einer (hydrophilen) bzw. wasserhaltigen Fällungskieselsäure (z. B. Filterkuchen nach Schritt b) oder Kieselsäuredispersion nach einem der Schritte a) oder c) oder c) + e) oder c) -> e)) gemischt. Dabei kann der Wassergehalt der hydrophilen Fällungskieselsäure in den bereits genannten Bereichen schwanken. Durch Mischen des Masterbatches mit wässrigen Kieselsäuredispersionen entstehen stabile Mischungen, bei denen sich das Hydrophobierungsmittel z. B. Silikonöl nicht mehr von der Kieselsäure abtrennt. Die Gesamtmischung enthält typischerweise 1 Gewichtsteil Hydrophobierungsmittel, ca. 4 - 8 Gewichtsteile Fällungskieselsäure und 20 - 60 Gewichtsteile Wasser.

Ein Beispiel für die Herstellung einer solchen Suspension lautet wie folgt:
Ein Masterbatch (50 % Kieselsäure und 50 % Silikonöl) wird mit ca. der 10 - 16-fachen Menge an Filterkuchen (Feststoffgehalt ca. 20 %) und ca. der 10 - 20-fachen Menge an zusätzlichem Wasser intensiv gemischt.

Der Vorteil dieser Vorgehensweise besteht darin, dass sich der wasserbenetzbare Masterbatch (der bis zu 75% an hydrophoben Organopolysiloxan enthält!) direkt in der Kieselsäuresuspensionen sehr fein und stabil verteilen läßt, ohne daß der Einsatz von Emulgatoren oder Tensiden erforderlich ist. Nach Trocknung oder Filtration und anschließender Trocknung einer solchen Mischung kann die so erhaltene organopolysiloxanhaltige Kieselsäure konditioniert werden (Schritt g)). Diese Schritte können einzeln, ggf. mit einer vorhergehenden Vermahlung durchgeführt werden. Die Vermahlung sollte jedoch nicht vor der Belegung f) durchgeführt werden. Es ist auch möglich, mehrere, d. h. gleiche oder unterschiedliche dieser Varianten nacheinander durchzuführen.

Es sind folgende Ausführungsformen des erfindungsgemäßen Verfahrens denkbar:

- Einer der Verfahrensschritte f), g) und h) wird mehrmals (2 bis 5 mal) hintereinander ausgeführt.
- Die Verfahrensschritte f) und h) werden mehrmals (2 bis 5 mal) hintereinander durchgeführt.
- Alle Verfahrensschritte f), g) und h) werden mehrmals (2 bis 5 mal) hintereinander durchgeführt, d. h. der Prozess wird mehrmals durchlaufen.

Da es sich bei den verwendeten Hydrophobierungsmitteln um schwerflüchtige Verbindungen handelt, spielen für die Vorverteilung der Hydrophobierungsmittel auf der Kieselsäureoberfläche Kapillarkräfte und Diffusionsvorgänge an der Flüssig/Fest-Phasengrenze eine wichtige Rolle.
Selbst wenn die bevorzugt eingesetzten Hydrophobierungsmittel im Verlauf einer thermischen Behandlung eine gewisse Flüchtigkeit aufweisen, ist die Flüssig/Fest-Verteilung trotzdem von Bedeutung. Aus diesem Grund wird hier zwischen physikalischer Vorverteilung, Konditionierung und Temperung unterschieden.

Die Temperung, d. h. Verfahrensschritt h) wird bei mindestens 150 °C, bevorzugt mindestens 170 °C, günstigerweise mindestens 190 °C durchgeführt.

Die Vermahlung und Sichtung von Fällungskieselsäuren (Schritt i) erfolgt nach bekannten Verfahren z. B. Prall-Sichtermühlen bzw. Strahl-Sichtermühlen (Ullmann's Encyclopedia of industrial chemistry, 1992, 5th edition, vol. B1, page 5-20 - 5-39, page 17-1 - 17-17). Die erfindungsgemäße Fällungskieselsäure kann auf verschiedenen Mühlen, wie z. B. Prallmühle, Luftstrahlmühle oder Gegenstrahlmühle, auf die gewünschte Endfeinheit vermahlen werden. Die Sichtung kann während oder nach der Vermahlung erfolgen. In der Regel werden die erfindungsgemäßen hydrophoben Fällungskieselsäuren auf eine mittlere Partikelgröße $d_{50}$ von < 14 $\mu$m, bevorzugt < 10 $\mu$m, besonders bevorzugt < 7,5 $\mu$m, ganz besonders bevorzugt < 6 $\mu$m und insbesondere < 5 $\mu$m vermahlen.

Die erfindungsgemäßen Fällungskieselsäuren werden bevorzugt in Entschäumerformulierungen zur Vermeidung starker Schaumbildung verwendet.

Weiterhin können die erfindungsgemäßen Kieselsäuren in allen Anwendungsgebieten verwendet werden, in denen üblicherweise Kieselsäuren eingesetzt werden, wie z. B. als verstärkender Füllstoff in Silikonkautschuk, in HTV-Silikonkautschuk als aufhellendes Additiv in peroxidisch vernetzenden Systemen, als Fließhilfsmittel, in Batterieseparatoren, als Anti-Blocking-Mittel, als Mattierungsmittel in Farben und Lacken, als Träger von zum Beispiel Agrarprodukten und Nahrungsmitteln, in Beschichtungen, in Druckfarben, in Feuerlöschpulvern, in Kunststoffen, im Bereich non impact printing, in Papiermasse, im Bereich personal care und Spezialanwendungen.

Unter Verwendung im Bereich non impact printing z. B. im Inkjet-Verfahren ist die Verwendung der erfindungsgemäßen Kieselsäuren in

- Druckfarben zur Verdickung oder zum Verhindern von Spritzen und Abliegen,

- Papier als Füllstoff, Streichpigment, Lichtpauspapier, Thermopapier, bei der Thermosublimation zur Verhinderung des Durchschlagens von Druckfarben, zur Verbesserung der Bildgrundruhe und Kontrast, zur Verbesserung der Punktschärfe und der Farbbrillianz zu verstehen.
- Unter Verwendung im Bereich personal care ist die Verwendung der erfindungsgemäßen Kieselsäuren als Füllstoff oder Verdickungsmittel z. B. im Bereich der Pharmazie oder Körperpflege zu verstehen.

**Messmethoden**

Die physikalisch/chemischen Daten der erfindungsgemäßen Fällungskieselsäuren werden mit den folgenden Methoden bestimmt:

**Bestimmung der BET-Oberfläche**

Die spezifische Stickstoff-Oberfläche (im folgenden BET-Oberfläche genannt) der pulverförmigen, kugelförmigen oder granulären Kieselsäure wird gemäß ISO 5794-1/Annex D mit einem Areameter (Fa. Ströhlein, JUWE) bestimmt.

**Bestimmung der spezifischen Oberfläche (CTAB)**

Die Methode beruht auf der Adsorption von CTAB (N-Hexadecyl-N,N,N-trimethylammoniumbromid) an der "äußeren" Oberfläche der Kieselsäure in Anlehnung an die ASTM 3765, bzw. NFT 45-007 (Kapitel 5.12.1.3).
Die Adsorption von CTAB erfolgt in wässriger Lösung unter Rühren und Ultraschallbehandlung. Überschüssiges, nicht adsorbiertes CTAB wird durch Rücktitration mit NDSS (Dioctylnatriumsulfosuccinat-Lösung, "Aerosol OT"-Lösung) mit einem Titroprozessor ermittelt, wobei der Endpunkt durch das Maximum der Trübung der Lösung gegeben ist und mit einer Phototrode bestimmt wird. Die Temperatur während aller durchgeführten Operationen beträgt 23 - 25 °C um das Auskristallisieren von CTAB zu verhindern. Der Rücktitration liegt die folgende Reaktionsgleichung zu Grunde:

$$\underset{\text{NDSS}}{(C_{20}H_{37}O_4)SO_3Na} + \underset{\text{CTAB}}{BrN(CH_3)_3(C_{16}H_{33})} \text{ ----> } (C_{20}H_{37}O_4)SO_3N(CH_3)_3(C_{16}H_{33}) + NaBr$$

Geräte

- Titroprozessor METTLER Toledo Typ DL 55 und Titroprozessor METTLER Toledo Typ DL 70, jeweils ausgerüstet mit: pH-Elektrode, Fabrikat Mettler, Typ DG 111 und Phototrode, Fabrikat Mettler, Typ DP 550
- Titrierbecher 100 ml aus Polypropylen
- Titrierglasgefäß, 150 ml mit Deckel
- Druckfiltrationsgerät, 100 ml Inhalt
- Membranfilter aus Cellulosenitrat, Porengröße 0,1 µm, 47 mm ∅, z. B. Whatman (Best. Nr. 7181-004)

Reagenzien

Die Lösungen von CTAB ($C_{CTAB}$ = 5,5 g/l in entionisiertem Wasser) und NDSS (0,00423 mol/l in entionisiertem Wasser) werden gebrauchsfertig bezogen (Fa. Kraft, Duisburg: Bestell-Nr. 6056.4700 CTAB-Lösung 0,015 mol/l; Bestell-Nr. 6057.4700 NDSS-Lösung 0,00423 mol/l), bei 25 °C aufbewahrt und innerhalb von einem Monat aufgebraucht.

Durchführung

1. Blindtitration

Der Verbrauch an NDSS-Lösung zur Titration von 5 ml CTAB-Lösung ist 1 x täglich vor jeder Messreihe zu prüfen. Dazu wird die Phototrode vor Beginn der Titration auf 1000 ± 20 mV eingestellt (entsprechend einer Transparenz von 100 %).
Es werden genau 5,00 ml CTAB-Lösung in einen Titrierbecher pipettiert und man fügt 50,0 ml entionisiertes Wasser hinzu. Unter Rühren erfolgt die Titration mit NDSS-Lösung nach der dem Fachmann geläufigen Messmethode mit dem Titroprozessor DL 55 bis zur max. Trübung der Lösung. Man bestimmt den Verbrauch $V_A$ an NDSS-Lösung in ml. Jede

Titration ist als Dreifachbestimmung auszuführen.

2. Adsorption

10,0 g der pulverförmigen, kugelförmigen oder granulierten Kieselsäure mit einem Feuchtegehalt von 5 ± 2 % (gegebenenfalls wird der Feuchtegehalt durch Trocknen bei 105 °C im Trockenschrank oder gleichmäßiges Befeuchten eingestellt) werden mit einer Mühle (Fa. Krups, Model KM 75, Artikel Nr. 2030-70) 30 Sekunden lang zerkleinert. Genau 500,0 mg der zerkleinerten Probe (Einwaage E) werden in ein 150 ml Titriergefäß mit Magnetrührstäbchen überführt und es werden genau 100,0 ml CTAB-Lösung ($T_1$) zudosiert. Das Titriergefäß wird mit einem Deckel verschlossen und mit einem Ultra Turrax T 25 Rührer (Rührwelle KV-18G, 18 mm Durchmesser) bei 18 000 U/min maximal 1 min lang bis zur vollständigen Benetzung gerührt. Das Titriergefäß wird an den Titroprozessor DL 70 geschraubt und der pH-Wert der Suspension wird mit KOH (0,1 mol/l) auf einen Wert von 9 ± 0,05 eingestellt. Sollte der pH-Wert bereits größer als pH = 9 sein, wird keine pH-Korrektur vorgenommen, um die Oberfläche nicht zu verändern.
Es erfolgt eine 4-minütige Beschallung der Suspension in dem Titriergefäß in einem Ultraschallbad (Fa. Bandelin, Sonorex RK 106 S, 35 kHz) bei 25 °C. Anschließend erfolgt eine umgehende Druckfiltration durch einen Membranfilter bei einem Stickstoffdruck von 1,2 bar. Der Vorlauf von 5 ml wird verworfen.

3. Titration

5,00 ml des übrigen Filtrats werden in einen 100 ml Titrierbecher pipettiert und mit entionisiertem Wasser auf 50,00 ml aufgefüllt. Der Titrierbecher wird an den Titroprozessor DL 55 geschraubt und unter Rühren erfolgt die Titration mit NDSS-Lösung bis zur maximalen Trübung. Man bestimmt den Verbrauch $V_B$ an NDSS-Lösung in ml. Jede Trübung ist als Dreifachbestimmung auszuführen.

Berechnung

$$CTAB(nicht\ feuchtekorrigiert) = \frac{V_A - V_B}{V_A} * \frac{C_{CTAB} * T_1 * P}{E}$$

$V_A$ = Verbrauch an NDSS-Lösung in ml bei der Titration der Blindprobe
$V_B$ = Verbrauch an NDSS-Lösung in ml bei Verwendung des Filtrats
$C_{CTAB}$ = Konzentration der CTAB-Lösung in g/l
$T_1$ = Zugegebene Menge an CTAB-Lösung
P = Platzbedarf für 1 g CTAB = 578,435 * $10^{-3}$ $m^2$
E = Einwaage an Kieselsäure

Die CTAB-Oberfläche wird auf die wasserfreie Kieselsäure bezogen, weshalb die folgende Korrektur durchgeführt wird.

$$CTAB = \frac{CTAB(nicht\ feuchtekorrigiert)\ in\ m^2/g * 100}{100 - Feuchte\ in\ \%}$$

Die Feuchte der Kieselsäure wird gemäß der nachfolgend beschriebenen Methode "Bestimmung der Feuchte bzw. des Trockenverlusts" ermittelt.

**Bestimmung des Kohlenstoffgehaltes**

Die Bestimmung des Kohlenstoffgehaltes in Kieselsäuren erfolgt mit dem "C-mat 500" (Fa. Ströhlein Instruments). Die Proben werden bei ca. 1 350 °C getempert und der Kohlenstoff durch einen Sauerstoffstrom zu $CO_2$ oxidiert. Das $CO_2$ wird in einer Infrarotzelle gemessen.
Bei den Messungen wird unterschieden, ob der Kohlenstoffgehalt größer oder kleiner als 1 Prozent beträgt. Liegt der Kohlenstoffgehalt der homogenen Kieselsäureproben oberhalb 1 Prozent, wird im "High"-Bereich des Gerätes gemessen, liegt er unterhalb von 1 Prozent, wird im "Low"-Bereich gemessen.

Zuerst wird die Kontrollprobe gemessen. Dazu werden auf ein ausgeglühtes, auf Raumtemperatur abgekühltes Porzellanschiffchen 0,14 - 0,18 g der Kontrollprobe auf einer Analysenwaage eingewogen. Beim Bedienen der Starttaste wird das Gewicht übernommen, da die Waage mit dem "C-mat" gekoppelt ist. Das Schiffchen muß innerhalb 30 Sekunden in die Mitte des Verbrennungsrohres geschoben werden. Nach Abschluß der Verbrennung wird der Messwert in Impulse umgewandelt und vom Rechner ausgewertet. Es werden mindestens 3 Bestimmungen (je nach Übereinstimmung) durchgeführt. Eventuell muß der Faktor des Gerätes neu eingestellt werden (Details siehe Bedienungsanleitung "C-mat 500", Firma Ströhlein Instruments). Dieser Faktor wird nach folgender Formel berechnet:

$$Faktor = \frac{Sollwert(Standard) \ * \ Einwaage(Standard)\ in\ g \ * \ 10^8}{Impulse}$$

Anschließend werden die Kieselsäureproben gemessen. Die Einwaage beträgt 0,04 - 0,05 g. Das Porzellanschiffchen wird mit einem Porzellandeckel abgedeckt. Bei Abweichungen > 0,005 % werden mehr Messungen durchgeführt und der Durchschnitt errechnet.
Die Handhabung des "C-mat 500" wird der Bedienungsanleitung der Firma Ströhlein Instruments entnommen.
Der Kohlenstoffgehalt in % wird wie folgt berechnet:

$$\text{Kohlenstoffgehalt} = ( I * F * 10^{-8} ) / E$$

I = Impuls
F = Faktor
E = Einwaage in g

**Bestimmung des pH-Wertes**

Das Verfahren in Anlehnung an DIN EN ISO 787-9 dient zur Bestimmung des pH-Wertes einer wässrigen Suspension von Kieselsäuren bei 20 °C.
Vor der Durchführung der pH-Messung ist das pH-Messgerät (Fa. Knick, Typ: 766 pH-Meter Calimatic mit Temperaturfühler) und die pH-Elektrode (Einstabmesskette der Fa. Schott, Typ N7680) unter Verwendung der Pufferlösungen bei 20 °C zu kalibrieren. Die Kalibrierungsfunktion ist so zu wählen, dass die zwei verwendeten Pufferlösungen den erwarteten pH-Wert der Probe einschließen (Pufferlösungen mit pH 4,00 und 7,00, pH 7,00 und pH 9,00 und ggf. pH 7,00 und 12,00).
5,00 g pulverförmige oder kugelförmige, hydrophobe Kieselsäure mit 5 ± 1 % Feuchtegehalt (gegebenenfalls wird der Feuchtegehalt durch Trocknen bei 105 °C im Trockenschrank oder gleichmäßiges Befeuchten vor der evtl. Zerkleinerung eingestellt) werden auf einer Präzisionswaage auf 0,01 g genau in eine zuvor tarierte Glas-Weithalsflasche eingewogen. Es wird bis zur 100 ml-Markierung mit 50,0 ml Methanol p.A. und 50,0 ml entionisiertes Wasser aufgefüllt.
Anschließend wird die Suspension im verschlossenen Gefäß für die Dauer von 5 Minuten mittels einer Schüttelmaschine (Fa. Gerhardt, Modell LS10, 55 W, Stufe 7) bei 20 °C geschüttelt. Die Messung des pH-Wertes erfolgt direkt im Anschluss. Dazu wird die Elektrode zunächst mit entionisierten Wasser, nachfolgend mit einem Teil der Suspension abgespült und anschließend in die Suspension eingetaucht. Nach Zugabe eines Magnetfisches in die Suspension wird bei einer konstanten Rührgeschwindigkeit mit leichter Trombenbildung der Suspension die pH-Messung durchgeführt. Nach exakt 5 min wird der pH-Wert an der Anzeige abgelesen.

**Bestimmung der DBP-Aufnahme**

Die DBP-Aufnahme (DBP-Zahl), die ein Maß für die Saugfähigkeit der Fällungskieselsäure ist, wird in Anlehnung an die Norm DIN 53601 wie folgt bestimmt: 12,50 g pulverförmige oder kugelförmige Kieselsäure mit 0 - 10 % Feuchtegehalt (gegebenenfalls wird der Feuchtegehalt durch Trocknen bei 105°C im Trockenschrank eingestellt) werden in die Kneterkammer (Artikel Nummer 279061) des Brabender-Absorptometer "E" gegeben (ohne Dämpfung des Ausgangsfilters des Drehmomentaufnehmers). Im Falle von Granulaten wird die Siebfraktion von 3,15 bis 1 mm (Edelstahlsiebe der Fa. Retsch) verwendet (durch sanftes Drücken der Granulate mit einem Kunststoffspatel durch das Sieb mit 3,15 mm Porenweite). Unter ständigem Mischen (Umlaufgeschwindigkeit der Kneterschaufeln 125 U/min) tropft man

bei Raumtemperatur durch den "Dosimaten Brabender T 90/50" Dibutylphthalat mit einer Geschwindigkeit von 4 ml/min in die Mischung. Das Einmischen erfolgt mit nur geringem Kraftbedarf und wird anhand der Digitalanzeige verfolgt. Gegen Ende der Bestimmung wird das Gemisch pastös, was mittels eines steilen Anstieges des Kraftbedarfs angezeigt wird. Bei einer Anzeige von 600 digits (Drehmoment von 0,6 Nm) wird durch einen elektrischen Kontakt sowohl der Kneter als auch die DBP-Dosierung abgeschaltet. Der Synchronmotor für die DBP-Zufuhr ist mit einem digitalen Zählwerk gekoppelt, so dass der Verbrauch an DBP in ml abgelesen werden kann.
Die DBP-Aufnahme wird in g/100g angegeben und anhand der folgenden Formel berechnet:

$$DBP = \frac{V * D * 100}{E} * \frac{g}{100g} + K$$

mit DBP = DBP-Aufnahme in g/100g

*V* = Verbrauch an DBP in ml
*D* = Dichte von DBP in g/ml (1,047 g/ml bei 20 °C)
*E* = Einwaage an Kieselsäure in g
*K* = Korrekturwert gemäß Feuchtekorrekturtabelle in g/100g

Die DBP-Aufnahme ist für die wasserfreie, getrocknete Kieselsäure definiert. Bei Verwendung von feuchten Fällungskieselsäuren ist der Korrekturwert *K* für die Berechnung der DBP-Aufnahme zu berücksichtigen. Dieser Wert kann anhand der folgenden Korrekturtabelle ermittelt werden, z. B. würde ein Wassergehalt der Kieselsäure von 5,8 % einen Zuschlag von 33 g/(100 g) für die DBP-Aufnahme bedeuten. Die Feuchte der Kieselsäure wird gemäß der nachfolgend beschriebenen Methode "Bestimmung der Feuchte bzw. des Trockenverlusts" ermittelt.
Feuchtekorrekturtabelle für Dibutylphthalataufnahme -wasserfrei

| % Wasser | .% Wasser .0 | .2 | .4 | .6 | .8 |
|---|---|---|---|---|---|
| 0 | 0 | 2 | 4 | 5 7 | |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

**Bestimmung der modifizierten Sears-Zahl von Kieselsäuren**

Durch die Titration von Kieselsäure mit Kaliumhydroxid-Lösung im Bereich von pH 6 bis pH 9 läßt sich die modifizierte Searszahl (im folgenden Searszahl $V_2$ genannt) als Maß für die Zahl an freien Hydroxy-Gruppen bestimmen. Der Bestimmungsmethode liegen die folgenden chemischen Reaktionen zu Grunde, wobei "Si"-OH eine Silanolgruppe der Kieselsäure symbolisieren soll:

**„Si“–OH + NaCl ⇨ „Si“–ONa + HCl**

$$HCl + KOH \Rightarrow KCl + H_2O.$$

10,00 g einer pulverförmigen, kugelförmigen oder granulären Kieselsäure mit 5 ± 1 % Feuchte werden 60 Sekunden mit einer IKA-Universalmühle M 20 (550 W; 20 000 U/min) zerkleinert. Gegebenenfalls muß der Feuchtegehalt der Ausgangssubstanz durch Trocknen bei 105 °C im Trockenschrank oder gleichmäßiges Befeuchten eingestellt und die Zerkleinerung wiederholt werden. 2,50 g der so behandelten Kieselsäure werden bei Raumtemperatur in ein 250 ml Titriergefäß eingewogen und mit 60,0 ml Methanol p. A. versetzt. Nach vollständiger Benetzung der Probe werden 40,0 ml entionisiertes Wasser zugegeben, und man dispergiert mittels eines Ultra Turrax T 25 Rührers (Rührwelle KV-18G, 18 mm Durchmesser) 30 Sekunden lang bei einer Drehzahl von 18 000 U/min. Mit 100 ml entionisiertem Wasser werden die am Gefäßrand und Rührer anhaftenden Probepartikel in die Suspension gespült und in einem thermostatisiertem Wasserbad auf 25 °C temperiert.
Das pH-Messgerät (Fa. Knick, Typ: 766 pH-Meter Calimatic mit Temperaturfühler) und die pH-Elektrode (Einstabmesskette der Fa. Schott, Typ N7680) werden unter Verwendung von Pufferlösungen (pH 7,00 und 9,00) bei Raumtemperatur kalibriert. Mit dem pH-Meter wird zunächst der Ausgangs-pH-Wert der Suspension bei 25 °C gemessen, danach wird je nach Ergebnis mit Kaliumhydroxid-Lösung (0,1 mol/l) bzw. Salzsäurelösung (0,1 mol/l) der pH-Wert auf 6,00 eingestellt. Der Verbrauch an KOH- bzw. HCl-Lösung in ml bis pH 6,00 entspricht $V_1$'.
Danach werden 20,0 ml Natriumchlorid-Lösung (250,00 g NaCl p. A. mit entionisiertem Wasser auf 1 l aufgefüllt) zudosiert. Mit 0,1 mol/l KOH wird dann die Titration bis zum pH-Wert 9,00 fortgesetzt. Der Verbrauch an KOH-Lösung in ml bis pH 9,00 entspricht $V_2$'.
Anschließend werden die Volumina $V_1$', bzw. $V_2$' zunächst auf die theoretische Einwaage von 1 g normiert und mit 5 erweitert, woraus sich $V_1$ und die Searszahl $V_2$ in den Einheiten ml/(5 g) ergeben.

## Bestimmung der Methanolbenetzbarkeit

Hydrophobe Kieselsäuren und Silikate lassen sich durch Zusatz von Methanol wasserbenetzbar machen. Dies erfolgt durch Methanol - Wasser - Gemische unterschiedlicher Konzentration. Es lassen sich so Aussagen über den Hydrophobierungsgrad der Kieselsäuren oder Silikate treffen.

Durchführung:

In 6 gleiche Zentrifugengläser von 15 ml Inhalt werden jeweils 200 mg hydrophobe Kieselsäure oder Silikat eingewogen und jedes der Gläser mit 8 ml eines Methanol-Wasser-Gemisches steigender Methanolkonzentration versetzt.
Die Methanolkonzentration der Gemische richtet sich nach der zu erwartenden Methanolbenetzbarkeit. Die Zentrifugengläser werden dicht verschlossen und dann kräftig geschüttelt (10 Auf- und Abwärtsbewegungen). Zur Abtrennung der benetzten Kieselsäure-Silikatanteile werden die Gläser dann 5 Minuten bei 2500 UpM zentrifugiert. Die benetzten Anteile bilden einen Bodensatz, dessen Volumina an der Skala der Zentrifugengläser abgelesen werden. Die Sediment-Volumina werden in einer Graphik gegen die Methanol/Wasser-Gemisch-Konzentration aufgetragen.
Die einzelnen Messpunkte ergeben eine Kurve (x-Achse: prozentualer Anteil an Methanol der Methanol/Wasser-Gemische, y-Achse: Höhe des Sediments), deren Lage und Steilheit den Hydrophobierungsgrad der Fällungskieselsäure charakterisiert. Als Maß für die Hydrophobierung wird der x-Achsen-Wert (in %) am Wendepunkt der Kurve angegeben.

## Bestimmung der mittleren Partikelgröße ($d_{50}$)

Die Anwendung der Laserbeugung zur Bestimmung von Teilchengrößen basiert auf der Erscheinung, dass Teilchen monochromatisches Licht mit unterschiedlichem Intensitätsmuster in alle Richtungen streuen. Diese Streuung ist abhängig von der Teilchengröße. Je kleiner die Teilchen, desto größer sind die Streuungswinkel.

Probenvorbereitung:

In einem 50 ml Schraubverschlussglas werden 4 ml des Pulvers mit 30 ml Ethanol durch Schütteln gemischt.

Durchführung:

Vor Beginn der Messung lässt man das Laserbeugungsgerät LS 230 (Fa. COULTER) und das Flüssigkeitsmodul (Small Volume Module Plus, 120 ml, Fa. COULTER) 2 h warmlaufen und spült das Modul dreimal mit Ethanol. Eine

Offsetmessung und eine Justierung erfolgt vom Gerät automatisch jede Stunde. In der Steuerleiste der Gerätesoftware wählt man über dem Menüpunkt "Messung" das Dateifenster "Opt. Modell berechnen" aus und legt die Brechungsindizes in einer .rfd-Datei fest: Flüssigkeitsbrechungsindex B. I. Real = 1,333; Material Brechungsindex Real = 1,46; Imaginär = 0,1. Die Pumpengeschwindigkeit wird auf 50 % eingestellt.
Grundsätzlich wird vor jeder Messung automatisch eine Hintergrundmessung durchgeführt. Eine Einwegpipette wird vor jeder Probennahme mit der Suspension dreimal gespült. Etwa 2 ml der Suspension werden mit der Pipette entnommen und 1 - 3 Tropfen sofort in das Flüssigkeitsmodul des Gerätes eindosiert. Der Rest in der Einwegpipette wird in das Becherglas zurückgegeben. Nach der Zugabe wird gewartet, bis das Laserbeugungsgerät eine konstante Konzentration anzeigt. Es wird solange Suspension zugefügt, bis eine Lichtabsorption von 8 bis 12 % erreicht ist und das Gerät "OK" meldet. Die Messung erfolgt bei Raumtemperatur mit dem Auswertemodell der oben festgelegten .rfd-Datei.
Zunächst wird eine Partikelmessung ohne Ultraschall durchgeführt. Danach erfolgt eine zweite, dritte und vierte Messung der gleichen Probe, bei der für 1, 2, und 3 min das Ultraschallgerät (SONICS VIBRACELL) bei einer Leistung von 20 W eingeschaltet wird. Weichen die Messungen wesentlich voneinander ab, so müssen die Messungen wiederholt werden. Bleiben die Unterschiede auch nach der Wiederholung bestehen, dann wird die Messung angegeben, die einer monomodalen gaußschen Teilchengrößenverteilung am nächsten kommt. So zeigen z. B. typischerweise sprühgetrocknete, hydrophobierte, unvermahlene Proben reproduzierbare, im wesentlichen monomodale Teilchengrößenverteilungen, wenn Sie ohne Ultraschallbehandlung gemessen werden. Bei hydrophobierten, fein vermahlenen Proben zeigen sich reproduzierbare, näherungsweise monomodale Teilchengrößenverteilungen oft erst nach einer 2 bis 3 Minuten Ultraschall. Bei sehr feinteiligen Proben kann es bei längerer Ultraschallbehandlung in gewissem Umfang zu Agglomerationserscheinungen kommen.
Im Zweifelsfall werden entweder alle Werte angegeben oder die Messwerte entsprechend gekennzeichnet. Dabei steht für 0, 1, 2, 3 Minuten Ultraschall die Kürzel: 0 min.US, 1 min.US, 2 min.US und 3 min.US.
Aus der Rohdatenkurve berechnet die Software auf Basis der Volumenverteilung unter Berücksichtigung der Mie-Theorie und den optischen Modellparametern (.rfd-Datei) die Teilchengrößenverteilung.

**Bestimmung des Feststoffgehalts von Filterkuchen**

In eine trockene, tarierte Porzellanschale (Durchmesser 20 cm) werden 100,00 g des Filterkuchens eingewogen (Einwaage E). Gegebenenfalls wird der Filterkuchen mit einem Spatel zerkleinert, um lockere Brocken von maximal 1 $cm^3$ zu erhalten. Die Probe wird bei 105 ± 2 °C in einem Trockenschrank bis zur Gewichtskonstanz getrocknet. Anschließend wird die Probe in einem Exsikkatorschrank mit Kieselgel als Trocknungsmittel auf Raumtemperatur abgekühlt. Die Auswaage A wird gravimetrisch bestimmt.

Man bestimmt die Feststoffgehalt in % gemäß

$$FG = A / E * 100,$$

mit:

FG = Feststoffgehalt in %
A = Auswaage in g
E = Einwaage in g

**Bestimmung** des **Feststoffgehaltes von Suspensionen**

Der Feststoffgehalt der Fällsuspension wird gravimetrisch nach Filtration der Probe bestimmt.

Durchführung

100,0 ml der homogenisierten Fällsuspension ($V_{Suspension}$) werden bei Raumtemperatur mit Hilfe eines Messzylinders abgemessen. Die Probe wird über einen Rundfilter (TYP 572, Fa. SCHLEICHER & SCHUELL) in einer Porzellannutsche filtriert, aber nicht trocken gesaugt, um Rißbildung des Filterkuchens zu verhindern. Anschließend wäscht man den Filterkuchen mit 100,0 ml entionisiertem Wasser. Der ausgewaschene Filterkuchen wird komplett filtriert, in eine tarierte Porzellanschale überführt und bei 105 ± 2 °C in einem Trockenschrank bis zur Gewichtskonstanz getrocknet. Das Gewicht der getrockneten Kieselsäure ($m_{Probe}$) wird ermittelt.
Der Feststoffgehalt in g/l bestimmt sich gemäß:

$$\text{Feststoffgehalt i} = m_{Probe} / V_{Suspension},$$

wobei
mit:

$m_{Probe}$ = Gewicht der getrockneten Kieselsäure
$V_{Suspension}$ = Volumen der untersuchten Fällsuspension

**Bestimmung der Feuchte bzw. des Trockenverlusts**

Die Feuchte oder auch Trockenverlust (TV) von Kieselsäuren wird in Anlehnung an ISO 787-2 nach 2-stündiger Trocknung bei 105 °C bestimmt. Dieser Trocknungsverlust besteht überwiegend aus Wasserfeuchtigkeit.
In ein trockenes Wägeglas mit Schliffdeckel (Durchmesser 8 cm, Höhe 3 cm) werden 10 g der pulverförmigen, kugelförmigen oder granulären Kieselsäure auf 0,1 mg genau eingewogen (Einwaage E). Die Probe wird bei geöffnetem Deckel 2 h bei 105 ± 2 °C in einem Trockenschrank getrocknet. Anschließend wird das Wägeglas verschlossen und in einem Exsikkatorschrank mit Kieselgel als Trocknungsmittel auf Raumtemperatur abgekühlt.
Das Wägeglas wird zur Bestimmung der Auswaage A auf der Präzisionswaage auf 0,1 mg genau ausgewogen. Man bestimmt die Feuchte (TV) in % gemäß

$$TV = (1 - A / E) * 100,$$

wobei A = Auswaage in g und E = Einwaage in g bedeuten.

**Bestimmung des Glühverlusts**

Nach dieser Methode wird der Gewichtsverlust von Kieselsäure in Anlehnung an DIN EN ISO 3262-1 bei 1 000 °C bestimmt. Bei dieser Temperatur entweicht physikalisch und chemisch gebundenes Wasser sowie andere flüchtige Bestandteile. Die Feuchte (TV) der untersuchten Probe wird nach der zuvor beschriebenen Methode "Bestimmung der Feuchte bzw. des Trockenverlusts" in Anlehnung an DIN EN ISO 787-2 ermittelt.
0,5 g der pulverförmigen, kugelförmigen oder granulären Kieselsäure werden auf 0,1 mg genau in einen vorgeglühten, tarierten Porzellantiegel eingewogen (Einwaage E). Die Probe wird 2 h bei 1000 ± 50 °C in einem Muffelofen erhitzt. Anschließend wird der Porzellantiegel in einem Exsikkatorschrank mit Kieselgel als Trocknungsmittel auf Raumtemperatur abgekühlt. Die Auswaage A wird gravimetrisch bestimmt.
Man erhält den Glühverlust (DIN) GV in % gemäß

$$GV = (1 - A / F) * 100.$$

F bedeutet die = korrigierte Einwaage in g - bezogen auf getrocknete Substanz - und errechnet sich nach

$$F = E * (1 - TV / 100).$$

In den Berechnungen bedeuten A = Auswaage in g, E = Einwaage in g und TV = Trockenverlust in %.

**Bestimmung der Stampfdichte**

Die Bestimmung der Stampfdichte erfolgt in Anlehnung an DIN EN ISO 787-11.
Eine definierte Menge einer zuvor nicht gesiebten Probe wird in einen graduierten Glaszylinder eingefüllt und mittels eines Stampfvolumeters einer festgelegten Anzahl von Stampfungen unterzogen. Während der Stampfung verdichtet sich die Probe. Als Ergebnis der durchgeführten Untersuchung erhält man die Stampfdichte.
Die Messungen werden auf einem Stampfvolumeter mit Zählwerk der Fa. Engelsmann, Ludwigshafen, Typ STAV 2003,

durchgeführt.
Zunächst wird ein 250 ml Glaszylinder auf einer Präzisionswaage tariert. Anschließend werden 250 ml Kieselsäure mit Hilfe eines Pulvertrichters so in den tarierten Messzylinder eingefüllt, dass sich keine Hohlräume bilden. Dies wird durch Neigen und Drehen des Zylinders um seine Längsachse während des Einfüllens erreicht. Anschließend wird die Probenmenge auf 0,01 g genau gewogen. Danach wird leicht an den Zylinder geklopft, so dass die Oberfläche der Kieselsäure im Zylinder waagrecht ist. Der Messzylinder wird in den Messzylinderhalter des Stampfvolumeters eingesetzt und 1 250 mal gestampft. Das Volumen der gestampften Probe wird nach einmaligem Stampfdurchgang auf 1 ml genau abgelesen.
Die Stampfdichte D(t) berechnet sich wie folgt:

$$D(t) = m * 1000 / V$$

mit:

D(t): Stampfdichte in g/l
V: Volumen der Kieselsäure nach dem Stampfen in ml
m: Masse der Kieselsäure in g

Die folgende Beispiele sollen die Erfindung näher erläutern, ohne ihren Umfang zu beschränken.

**Beispiel 1:**

In einem 80 l-Fällgefäß werden 63 l deionisiertes Wasser vorgelegt und auf 88 °C erwärmt. Zu dieser Vorlage werden Wasserglas (Modul = 3,5; Dichte = 1,343 g/ml) mit einer Dosiergeschwindigkeit von 6,5 l/h und Schwefelsäure (Konzentration = 7,167 mol/l) mit einer Dosiergeschwindigkeit von 1,56 l/h so zudosiert das ein pH-Wert von 8,0 - 8,5 (gemessen an einer 60 °C warmen Probe) eingehalten wird. Nach 105 Minuten werden die Zudosierungen beendet. Anschließend wird die Fällsuspension mit Schwefelsäure (Konzentration = 7,167 mol/l) bei gleicher Dosiergeschwindigkeit wie zuvor bis zu einem pH-Wert von 3,5 angesäuert und im Trockenschrank bei 50 °C für die Dauer von 12 h nachbehandelt.
Die Suspension wird filtriert und mit deionisiertem Wasser ausreichend gewaschen. Der erhaltene Feststoffgehalt des Filterkuchens liegt bei 15-17 %.
Der Filterkuchen wird unter Vorlage von deionisiertem Wasser und schonendem Rühren so verflüssigt, dass sich eine Kieselsäuresuspension von 6-11 % Feststoffgehalt ergibt. Dann wird diese Suspension mit NaOH-Lösung (50 Gew.-%) auf einen pH-Wert von 9 eingestellt. Unmittelbar danach erfolgt die Sprühtrocknung der Suspension (Trocknerausgangstemperatur 130 °C). Nach der Sprühtrocknung wird die Fällungskieselsäure unter Rühren in einem Mischaggregat (M5R, Fa. LÖDIGE) mit Silikonöl (Dimethylpolysiloxan methylterminiert, 50 mPa s, z. B. DOW CORNING (R) 200 FLUID 50 CS, Kohlenstoffgehalt von ca. 33 %) gleichmäßig besprüht und bei 200 °C für 3 h im Muffelofen getempert. Die getrocknete Fällungskieselsäure wird mittels einer Prallsichtermühle (50 ZPS, Fa. HOSOKAWA-ALPINE) vermahlen.
Das erhaltene Produkt weist folgende physikalisch-chemischen Parameter auf:

| | |
|---|---|
| BET | 56 $m^2/g$ |
| Kohlenstoffgehalt | 7,9 % |
| pH-Wert | 9,7 |
| Mod. Sears-Zahl | 1,2 ml/(5g) |
| Sears/BET-Verhältnis | 0,021 ml/(5$m^2$) |
| DBP | 175 g/100g |
| CTAB | 66 $m^2/g$ |
| BET/CTAB-Verhältnis | 0,85 |
| Methanolbenetzbarkeit | 65 % |
| Mittlere Partikelgröße $d_{50}$ (3 min US / 20 W) | 6,4 $\mu$m |
| Glühverlust | 17,7 % |

(fortgesetzt)

| | |
|---|---|
| Stampfdichte | 127 g/l |

**Beispiele 2 und Vergleichsbeispiele 1 - 2**

In Beispielen 2 und den Vergleichsbeispielen 1 - 2 werden Fällungskieselsäuren auf ihre Eignung in Entschäumerformulierungen untersucht. Die Eigenschaften von Fällungskieselsäuren werden dabei an Modellformulierungen untersucht, die einen weiten Bereich der industriell verwendeten Formulierungen und Einsatzgebiete abdecken.

Eine Grundvoraussetzung für eine leistungsfähige Formulierung ist ein effektiver Dispersionsschritt der hochdispersen Fällungskieselsäure in ausgewählten Ölen. Dabei kommt es darauf an, die Fällungskieselsäure möglichst homogen in der Ölphase zu verteilen, ohne die Fällungskieselsäure durch zu hohe Scherkräfte zu zerstören.

**Herstellung einer Dispersion von Fällungskieselsäure in Silikonöl**

Reagenzien

- Siliconöl "DC 200/100 cs" (Polydimetylsiloxan, Fa. Dow Corning, Datenblatt vom 31.03.1998)
- Hydrophobe Fällungskieselsäure

Geräte

- Analysenwaage
- Becherglas 250 ml, Höhe: 120 mm; Durchmesser: 60 mm
- Ultra Turrax T50 (Fa. Janke & Kunkel)

Durchführung

Herstellung der Siliconöldispersionen:

In ein 250 ml Becherglas werden auf der Analysenwaage 7,00 g Siliconöl und 3,00 g der zu prüfenden Fällungskieselsäure eingewogen. Die Fällungskieselsäure wird vorsichtig mit einem Spatel eingerührt, bis sie vollständig benetzt ist. Anschließend wird mit einem Ultra Turrax T50 für 10 Minuten bei 10 000 U/min dispergiert. Dabei kann sich die Dispersion erwärmen.
Nachdem die Dispersion auf Raumtemperatur abgekühlt ist, kann sie für die anwendungstechnischen Prüfungen eingesetzt werden.

**Herstellung einer Dispersion von Fällungskieselsäure in Mineralöl**

Reagenzien

- Mineralöl "SHELL RISELLA Oil G 18" (Fa. Deutsche Shell, Datenblatt VSV-T(F) 7 v. August 1996)
- Hydrophobe Fällungskieselsäure

Geräte

- Analysenwaage
- Becherglas 250 ml, Höhe: 120 mm; Durchmesser: 60 mm
- Ultra Turrax T50 (Fa. Janke & Kunkel)

Durchführung

In einem 250 ml Becherglas werden auf der Analysenwaage 57,00 g Mineralöl und 3,00 g der zu prüfenden Fällungskieselsäure eingewogen. Die Fällungskieselsäure wird vorsichtig mit einem Spatel eingerührt, bis sie vollständig benetzt ist. Anschließend wird mit einem Ultra Turrax T50 für 10 Minuten bei 10 000 U/min dispergiert. Dabei kann sich die Dispersion erwärmen. Nachdem sie auf Raumtemperatur abgekühlt ist, kann sie für die anwendungstechnischen Prüfungen eingesetzt werden.

**Prüfung der Entschäumungswirkung**

Dieser Entschäumertest ist besonders geeignet, um bewegte schäumende Systeme abzubilden.

Reagenzien:

- Testwaschmittel, bestehend aus:
  - Natriumdodecylbenzosulfonat (Maranil® Paste A 55, Fa. Cognis Dtl. GmbH & Co. KG, Datenblatt Revision-No. 9-01.2000) 11,67%
  - Fettalkohol C16-C18 mit ca. 5 mol EO (Dehydol® TA 5, Fa. Cognis Dtl. GmbH & Co. KG, Datenblatt Revision-No. 3-01.1998) 1,21 %
  - Fettalkohol C12-C18 mit ca. 7 mol EO (Dehydol® LT 7, Fa. Cognis Dtl. GmbH & Co. KG,
  - Datenblatt Revision-No. 6-08.1999) 7,24 %
  - 1-Hydroxyethyliden-1,1-diphosphonsäure (Dequest 2010, Fa. Brenntag N.V,) 0,28 %
  - Natriumsalz eines Maleinsäure/Acrylsäure-Copolymers (Sokolan CP5, Fa. BASF AG, Datenblatt TI/ES 1081d v. Mai 1990) 6,52 %
  - Zeolith A Compound (Wessalith 4020, Fa. Henkel KGaA) 36,58 %
  - Natriumdisilikat (Portil N, Fa. Cognis Dtl. GmbH & Co. KG) 3,26 %
  - Natriumcarbonat 18,11 %
  - Natriumsulfat 15,13 %

  Zur Herstellung des Testwaschmittels werden alle pulverförmigen Rohstoffe in einem handelsüblichen Mischgerät z. B. Lödige-Mischer vorgelegt. Die flüssigen Rohstoffe werden unter Rühren auf die pulverförmigen aufgesprüht. Nachdem alle flüssigen Rohstoffe aufgesprüht sind, muss noch ca. 10 min weiter gemischt werden, um eine homogene Verteilung zu erreichen.
- Silikonöl- oder Mineralöldispersion der Fällungskieselsäure

Geräte:

- CONTIFOAM - Apparatur
- Zahnradpumpe mit Düse
- Thermostat
- Heizplatte
- Magnetrührer
- Mikroliterpipette

Die Pumpentestapparatur ist in **Abbildung 1** schematisch dargestellt. Sie besteht aus einem doppelwandigen Glasgefäß (1), einem temperierten Ölbad, einer Zahnradpumpe (2) sowie einer Schaumhöhenerfassung mittels Fotozellen (3a und 3b). Zunächst wird durch Einrühren von 6 g des Testwaschmittels in 994 g Wasser eine Waschlauge hergestellt. Durch Zugabe von Natronlauge wird diese auf pH 13 eingestellt.

Zur Testdurchführung werden 500 ml dieser Waschlauge vorsichtig in das Glasgefäß (1) eingefüllt. Die Waschlauge im Glasgefäß wird auf 60 °C erwärmt und durch Einschalten einer Zahnradpumpe (2) mit einer Förderleistung von 1200 ml/min durch eine Düse (**Abbildung 2**) gefördert, wobei die Waschlauge aufgeschäumt wird. Bei der verwendeten Düse handelt sich um eine Wasserstrahlpumpe nach Friedrichs-Antlinger (Bestell-Nr. 181-9401; Katalog "VWR"

von 2003). Gleichzeitig mit Einschalten der Zahnradpumpe wird die Messung gestartet. Nach Erreichen der maximalen Schaumhöhe wird die zu prüfende Entschäumerdispersion (0,07 ml bei Mineralöldispersionen und 0,01 ml bei Siliconöldispersionen) mit einer Mikroliterpipette auf ein Mal zur Schaumlösung zugegeben und die zeitliche Entwicklung der Schaumhöhe als Funktion der Zeit aufgezeichnet.
Der schematische Kurvenverlauf ist in **Abbildung 3** dargestellt. Nach Einschalten der Zahnradpumpe steigt der Schaum an (5). Ist eine definierte Schaumhöhe erreicht wird, wird die Entschäumerformulierung eingespritzt (6). Der Schaum fällt in sich zusammen. Je nach Qualität der Entschäumerformulierung ergibt sich die verbleibende Schaumhöhe. Die Fähigkeit des Entschäumers, die Schaumhöhe sofort nach Zugabe bis zu einer bestimmten Schaumhöhe zu verringern, wird durch die Kenngröße "Knock-Down" ( 7) beschrieben. Er definiert sich als Differenz zwischen der Schaumhöhe zum Zeitpunkt der Zugabe der Entschäumerformulierung und der minimalen verbleibenden Schaumhöhe. Die Zeit, die zwischen Zugabe der Entschäumerformulierung und Erreichen der niedrigsten Schaumhöhe vergeht, wird als Knock-Down-Zeit (8) bezeichnet. Im weiteren Verlauf des Test auf Entschäumungswirkung lässt die Wirkung der Entschäumerformulierung je nach deren Qualität unterschiedlich schnell wieder nach. Die Schaumhöhe steigt wieder an (9). Die Zeit, die zwischen dem Zeitpunkt des Erreichens der minimalen Schaumhöhe nach Zugabe der Entschäumerformulierung und dem Zeitpunkt vergeht, zu dem eine Schaumhöhe von 200 mm wieder erreicht wird, wird durch die Kenngröße Hold-Down (10) charakterisiert. Der Hold-Down ist damit ein Maß für die Standzeit des Entschäumers, d. h. die Dauer der Wirksamkeit. Entschäumerformulierungen, bei denen die Schaumhöhe nicht auf unter 200 mm reduziert wird, wird kein Hold-Down zugeordnet.
Das Ausmaß der Schaumbildung / Menge an Schaum wird u. a. mit der Durchflussmenge, Düsenform bzw. weitere reguliert. Vorteil dieser Prüfmethode ist, dass als Prüflösung verschiedene wässrige, temperierte Schaumlösungen unter dynamischen, praxisnahen Bedingungen getestet werden können. Des Weiteren findet eine Kontrolle des Entschäumers über einen bestimmten Zeitraum statt. Es ist nicht nur die Aussage möglich, ob der Entschäumer und somit die darin befindliche Kieselsäure eine Wirkung aufweist, sondern auch wie schnell die Wirkung einsetzt, wie stark sie ist und wie lange sie anhält. Das Nachlassen der Wirkung von Entschäumern ist ein bekanntes Phänomen, das durch extreme Bedingungen (hohe Temperatur, hohe Alkalinität, hohe Scherkräfte) noch beschleunigt wird. Da diese Bedingungen sämtlich nachgestellt werden können, ist eine Aussage, welche Kieselsäure in Kombination mit einem Öl unter praxisnahen Bedingungen die besten Entschäumungseigenschaften aufweist, möglich.

**Beispiel 2:**

Aus dem Produkt aus Beispiel 1 wird sowohl eine Mineralöl- als auch eine Silikonöldispersion hergestellt und auf Entschäumungswirkung untersucht.

**Vergleichsbeispiel 1:**

Als Vergleichsbeispiel 1 wird aus der hydrophoben Fällungskieselsäure Sipernat D10 (Fa. DEGUSSA AG) sowohl eine Mineralöl- als auch eine Silikonöldispersion hergestellt und auf Entschäumungswirkung untersucht.

**Vergleichsbeispiel 2:**

Bei Vergleichsbeispiel 2 handelt es sich um eine hydrophobe Fällungskieselsäure aus der Patentschrift EP 1 281 735, Beispiel 2. Aus dieser Fällüngskieselsäure wird sowohl eine Mineralöl- als auch eine Silikonöldispersion hergestellt und auf Entschäumungswirkung untersucht.

Tabelle 1:

| | | **Beispiel 2** | **Vergleichsbeispiel 1** | **Vergleichsbeispiel 2** |
|---|---|---|---|---|
| BET | $m^2/g$ | 56 | 110 | 96 |
| CTAB | $m^2/g$ | 66 | 78 | 41 |
| BET/CTAB -Verhältnis | - | 0,85 | 1,41 | 2,34 |
| Kohlenstoffgehalt | % | 7,9 | 2,9 | 3,9 |
| pH-Wert | - | 9,7 | 9,9 | 7,9 |
| DBP | g/100g | 175 | 210 | 207 |
| Mod. Sears-Zahl | ml/(5g) | 1,2 | 5,6 | 1,3 |

(fortgesetzt)

| | | Beispiel 2 | Vergleichsbeispiel 1 | Vergleichsbeispiel 2 |
|---|---|---|---|---|
| Sears/BET-Verhältnis | ml/(5m$^2$) | 0,021 | 0,051 | 0,014 |
| Methanolbenetzbarkeit | % | 65 | 58 | 67 |
| Mittlere Partikelgröße $d_{50}$ (3 min.US / 20 W) | µm | 6,4 | 7,5 | 11 |
| Glühverlust | % | 17,7 | 5,8 | n.b. |
| Stampfdichte | g/l | 127 | 114 | n.b. |
| Knock-Down [1)] | mm | 300,64 | 59,97 | 78,8 |
| Knock-Down-Zeit [1)] | min | 1,58 | 3,09 | 4,75 |
| Hold-Down [1)] | min | 2,45 | - | - |
| Knock-Down [2)] | mm | 357,37 | 328,6 | 320,96 |
| Knock-Down-Zeit [2)] | min | 0,25 | 0,5 | 0,42 |
| Hold-Down [2)] | min | 0,82 | 0,47 | 0,47 |

n.b. = nicht bestimmt
1) Mineralöldispersion / Testwaschmittel / pH 13
2) Silikonöldispersion / Testwaschmittel / pH 13

Die Kurvenverläufe für den Test auf Entschäumungswirkung für Beispiel 2 und die Vergleichsbeispiele 1 - 2 sind in **Abbildung 4** (für Mineralöldispersionen) und **Abbildung 5** (für Silikonöldispersionen) dargestellt.

## Patentansprüche

1. Hydrophobe Fällungskieselsäure, **gekennzeichnet durch**

| | |
|---|---|
| BET | < 110 m$^2$/g |
| CTAB | < 150 m$^2$/g |
| BET/CTAB-Verhältnis | < 3 |
| Kohlenstoffgehalt | > 3.1 % |
| pH-Wert | > 9. |

2. Hydrophobe Fällungskieselsäure nach Anspruch 1,
**dadurch gekennzeichnet,**
**dass** sie einen pH-Wert zwischen 9 und 10,5 aufweisen.

3. Hydrophobe Fällungskieselsäure nach Anspruch 1 oder 2,
**dadurch gekennzeichnet,**
**dass** sie eine DBP < 230 g/(100g) aufweisen.

4. Hydrophobe Fällungskieselsäure gemäß einem der vorhergehenden Ansprüche,
**dadurch gekennzeichnet,**
**dass** die modifizierte Sears-Zahl kleiner 6 ml/(5 g) ist.

5. Hydrophobe Fällungskieselsäure gemäß einem der vorhergehenden Ansprüche,
**dadurch gekennzeichnet,**
**dass** sie eine Silanolgruppendichte, d. h. ein Verhältnis von modifizierter Sears-Zahl zu BET von kleiner 0.05 ml/(5m$^2$) aufweist.

**6.** Hydrophobe Fällungskieselsäure gemäß einem der vorhergehenden Ansprüche,
**dadurch gekennzeichnet,**
**dass** sie eine Methanolbenetzbarkeit größer 50 % aufweist.

**7.** Hydrophobe Fällungskieselsäure gemäß einem der vorhergehenden Ansprüche,
**dadurch gekennzeichnet,**
**dass** sie eine mittlere Partikelgröße $d_{50}$ kleiner 14 µm aufweist.

**8.** Verfahren zur Herstellung hydrophober Fällungskieselsäuren, umfassend die Schritte

a) Fällung einer Fällungskieselsäure,
b) Filtration,
c) Verflüssigung des Filterkuchens durch Zugabe von Wasser,
d) Trocknung der Suspension,
h) Durchführung einer Temperung bei über 150 °C und
i) Vermahlung der hydrophoben Fällungskieselsäure,
**dadurch gekennzeichnet,**
**dass** ein Schritt
e) Alkalisierung der Fällungskieselsäure durch Zugabe von zumindest einem basischen Mittel
durchgeführt und dass die Fällungskieselsäure in Schritt
f) Herstellung einer Mischung aus zumindest einem Hydrophobierungsmittel und einer Fällungskieselsäure, einer Fällungskieselsäuredispersion oder eines Fällungskieselsäurefilterkuchens

mit einem Hydrophobierungsmittel belegt wird.

**9.** Verfahren nach Anspruch 8,
**dadurch gekennzeichnet,**
**dass** Schritt a) in folgenden Unterschritten durchgeführt wird:

aa) Aufheizen einer Vorlage aus Wasser oder Wasser mit Wasserglas vermischt auf eine Temperatur zwischen 60 und 100 °C, bevorzugt zwischen 70 und 90 °C
ab) Simultane Zugabe von Wasserglas und Säure in die Vorlage
ac) Erniedrigung des pH-Wertes durch Zugabe eines Säurungsmittels

**10.** Verfahren nach Anspruch 9,
**dadurch gekennzeichnet,**
**dass** nach Schritt ac) der Schritt
ad) Reifung der Fällsuspension bei 10 °C bis 95 °C, bevorzugt bei 40 °C bis 60 °C, für 0 bis 72 Stunden, bevorzugt von 0 bis 12 Stunden,
durchgeführt wird.

**11.** Verfahren nach einem der Ansprüche 9 - 10,
**dadurch gekennzeichnet,**
**dass** der pH-Wert in Schritt ab) auf einen Wert zwischen 7 und 11 gehalten wird.

**12.** Verfahren nach einem der Ansprüche 9-11,
**dadurch gekennzeichnet,**
**dass** die Temperatur der Reaktionslösung in Schritt ab) auf einen Wert zwischen 60 und 100°C gehalten wird.

**13.** Verfahren nach einem der Ansprüche 9 - 12,
**dadurch gekennzeichnet,**
**dass** die simultane Zugabe von Wasserglas und Säurungsmittel bis zu einer Feststoffkonzentration von 40 bis 70 g/l fortgeführt und dann gestoppt wird.

**14.** Verfahren nach einem der Ansprüche 9-13,
**dadurch gekennzeichnet,**
**dass** der pH-Wert in Schritt ac) durch Zugabe eines Säurungsmittels auf 2 bis 8 eingestellt wird.

**15.** Verfahren nach einem der Ansprüche 8 - 14,
**dadurch gekennzeichnet,**
**dass** Schritt e) gleichzeitig mit Schritt c) durchgeführt wird.

**16.** Verfahren nach einem der Ansprüche 8 - 14,
**dadurch gekennzeichnet,**
**dass** Schritt e) nach Schritt c) jedoch vor Schritt d) durchgeführt wird.

**17.** Verfahren nach einem der Ansprüche 8 - 14,
**dadurch gekennzeichnet,**
**dass** Schritt e) nach Schritt d) durchgeführt wird.

**18.** Verfahren nach einem der Ansprüche 8 -17;
**dadurch gekennzeichnet,**
**dass** der pH-Wert der Fällungskieselsäure oder der Suspension in Schritt e), durch Zugabe des basischen Mittels auf 7 bis 11 eingestellt wird.

**19.** Verfahren nach einem der Ansprüche 8 - 18,
**dadurch gekennzeichnet,**
**dass** das basische Mittel ausgewählt wird aus der Gruppe der Alkalihydroxide, Alkalicarbonate, Erdalkalihydroxide, Erdalkalicarbonate, Alkalioxide, Erdalkalioxide, Alkalisilicate, Erdalkalisilicate, Ammoniak und Alkalialuminate oder wässrige Lösungen oder Gemische besagter Basen

**20.** Verfahren nach einem der Ansprüche 8 - 19,
**dadurch gekennzeichnet,**
**dass** die Mischung des Hydrophobierungsmittels mit der Fällungskieselsäure in Schritt f) derart erfolgt, dass das Hydrophobierungsmittel zu einer Fällungskieselsäure mit einem Wassergehalt von 1.0 bis 80 Gew. % zugegeben wird.

**21.** Verfahren nach einem der Ansprüche 8 - 19,
**dadurch gekennzeichnet,**
**dass** die Mischung des Hydrophobierungsmittels mit der Fällungskieselsäure in Schritt f) derart erfolgt, dass das Hydrophobierungsmittel zu einer Fällungskieselsäure mit einem Wassergehalt von 70 bis 99 Gew. % zugegeben wird.

**22.** Verfahren nach einem der Ansprüche 8 - 19,
**dadurch gekennzeichnet,**
**dass** die Mischung des Hydrophobierungsmittels mit der Fällungskieselsäure in Schritt f) durch gleichzeitiges Zuführen des Hydrophobierungsmittels und der Fällungskieselsäure in einen Spin-Flash-Trockner erfolgt.

**23.** Verfahren nach einem der Ansprüche 8 - 19,
**dadurch gekennzeichnet,**
**dass** die Mischung des Hydrophobierungsmittels mit der Fällungskieselsäure in Schritt f) durch Zugabe des Hydrophobierungsmittels in eine Suspension oder Dispersion der Fällungskieselsäure erfolgt.

**24.** Verfahren nach einem der Ansprüche 8 - 19,
**dadurch gekennzeichnet,**
**dass** die Mischung des Hydrophobierungsmittels mit der Fällungskieselsäure in Schritt f) durch Mischen einer zuvor getrockneten Fällungskieselsäure mit dem Hydrophobierungsmittel erfolgt.

**25.** Verfahren nach einem der Ansprüche 20 bis 24,
**dadurch gekennzeichnet,**
**dass** das Hydrophobierungsmittel mit einer bereits alkalisierten Fällungskieselsäure vermischt wird.

**26.** Verfahren nach einem der Ansprüche 20 bis 24,
**dadurch gekennzeichnet,**
**dass** die Alkalisierung in Schritt e) nach der Vermischung des Hydrophobierungsmittels mit der Fällungskieselsäure erfolgt.

27. Verfahren nach einem der Ansprüche 8 bis 26,
**dadurch gekennzeichnet,**
**dass** als Hydrophobierungsmittel Organopolysiloxanderivate oder Siliziumverbindungen, die unter den gewählten Reaktionsbedingungen zu Organopolysiloxanen reagieren, verwendet werden.

28. Verfahren nach einem der Ansprüche 8 bis 27,
**dadurch gekennzeichnet,**
**dass** mit dem Hydrophobierungsmittel belegte Fällungskieselsäure oder die Mischung der Fällungskieselsäure mit dem Hydrophobierungsmittel, einem Schritt
g) Konditionierung bei 10 bis 150 °C für einen Zeitraum von 0,5 bis 72 h,
unterzogen wird.

29. Verfahren nach Anspruch 28,
**dadurch gekennzeichnet,**
**dass** die Konditionierung bei 100 bis 150° für einen Zeitraum von 0.5 bis 2 Stunden erfolgt.

30. Verfahren nach einem der Ansprüche 8 bis 29,
**dadurch gekennzeichnet,**
**dass** auf Schritt g) der Schritt h) folgt.

31. Verfahren nach einem der Ansprüche 8 bis 30,
**dadurch gekennzeichnet,**
**dass** die Mischung des Hydrophobierungsmittels mit der Fällungskieselsäure in Schritt f) durch Mischen einer bereits konditionierte Fällungskieselsäure erhalten nach Schritt g) mit einer hydrophilen Fällungskieselsäure erfolgt.

32. Verfahren nach Anspruch 31,
**dadurch gekennzeichnet,**
**dass** eine konditionierte Fällungskieselsäure nach Schritt g) mit einem Filterkuchen oder einer Suspension oder einer Dispersion der hydrophilen Fällungskieselsäure vermischt wird.

33. Verfahren nach einem der Ansprüche 8 bis 32,
**dadurch gekennzeichnet,**
**dass** einer der Verfahrensschritte f), g) und h) mehrmals hintereinander durchgeführt wird.

34. Verfahren nach einem der Ansprüche 8 bis 32,
**dadurch gekennzeichnet,**
**dass** die Verfahrensschritte f) und h) mehrmals hintereinander durchgeführt werden.

35. Verfahren nach einem der Ansprüche 8 bis 32,
**dadurch gekennzeichnet,**
**dass** die Verfahrensschritte f), g) und h) mehrmals hintereinander durchgeführt werden.

36. Verwendung der hydrophoben Fällungskieselsäure gemäß einem der Ansprüche 1 - 7 in Entschäumerformulierungen.

37. Verwendung der hydrophoben Fällungskieselsäure gemäß einem der Ansprüche 1 - 7 in Silikonkautschuk als verstärkender Füllstoff.

38. Verwendung der hydrophoben Fällungskieselsäure gemäß einem der Ansprüche 1 - 7 in HTV-Silikonkautschuk als aufhellendes Additiv in peroxidisch vemetzenden Systemen.

39. Verwendung der hydrophoben Fällungskieselsäure gemäß einem der Ansprüche 1 - 7 als Fließhilfsmittel.

40. Verwendung der hydrophoben Fällungskieselsäure gemäß einem der Ansprüche 1 - 7 als Träger.

41. Verwendung der hydrophoben Fällungskieselsäure gemäß einem der Ansprüche 1 - 7 im Bereich Antiblocking.

## Claims

1. Hydrophobic precipitated silica **characterized by**

| | |
|---|---|
| BET | < 110 $m^2/g$ |
| CTAB | < 150 $m^2/g$ |
| BET/CTAB ratio | < 3 |
| carbon content | > 3.1% |
| pH | > 9. |

2. Hydrophobic precipitated silica according to Claim 1, **characterized in that** it has a pH of between 9 and 10.5.

3. Hydrophobic precipitated silica according to Claim 1, **characterized in that** it has a DBP < 230 g/(100 g).

4. Hydrophobic precipitated silica according to one of the preceding claims, **characterized in that** the modified Sears number is less than 6 ml/(5 g).

5. A hydrophobic precipitated silica according to one of the preceding claims, **characterized in that** it has a silanyl group density, i.e., a ratio of modified Sears number to BET, of less than 0.05 ml/(5$m^2$).

6. Hydrophobic precipitated silica according to one of the preceding claims, **characterized in that** it has a methanol wettability of more than 50%.

7. Hydrophobic precipitated silica according to one of the preceding claims, **characterized in that** it has a mean particle size $d_{50}$ of less than 14 $\mu$m.

8. Process for preparing a hydrophobic precipitated silica, comprising the steps of

   a) precipitating a precipitation silica,
   b) filtering,
   c) liquefying the filtercake by adding water,
   d) drying the suspension,
   h) heat treating at more than 150°C, and
   i) milling the hydrophobic precipitated silica,
   **characterized in that** a step is performed
   e) alkalifying the precipitated silica by adding at least one basic agent
   and **in that** the precipitated silica is coated in step
   f) preparing a mixture of at least one hydrophobicizer and a precipitated silica, a precipitated silica dispersion or a precipitated silica filtercake

   with a hydrophobicizer

9. Process according to Claim 8, **characterized in that** step a) is carried out in the following substeps:

   aa) heating an initial charge of water, or of water mixed with waterglass, to a temperature of between 60 and 100°C, preferably between 70°C and 90°C
   ab) simultaneously adding waterglass and acid to the initial charge
   ac) lowering the pH by adding an acidifier.

10. Process according to Claim 9, **characterized in that** step ac) is followed by step
    ad) aging the precipitation suspension at 10°C to 95°C, preferably at 40°C to 60°C, for 0 to 72 hours, preferably from 0 to 12 hours.

11. Process according to any one of Claims 9-10, **characterized in that** the pH in step ab) is held at a level between 7 and 11.

**12.** Process according to any one of Claims 9-11, wherein the temperature of the reaction solution in step ab) is held at a level between 60 and 100°C,

**13.** Process according to any one of Claims 9-12, **characterized in that** the simultaneous addition of waterglass and acidifier is continued to a solids concentration of 40 to 70 g/l and then stopped.

**14.** Process according to any one of Claims 9-13, **characterized in that** the pH in step ac) is adjusted by adding an acidifier to from 2 to 8.

**15.** Process according to any one of Claims 8-14, **characterized in that** step e) is carried out simultaneously with step c).

**16.** Process according to any one of Claims 8-14, **characterized in that** step
e) is carried out after step c) but before step d).

**17.** Process according to any one of Claims 8-14, **characterized in that** step e) is carried out after step d).

**18.** Process according to any one of Claims 8-17, **characterized in that** the pH of the precipitated silica or of the suspension in step e) is adjusted to from 7 to 11 by adding the basic agent.

**19.** Process according to any one of Claims 8-18, **characterized in that** the basic agent is selected from the group consisting of alkali metal hydroxides, alkali metal carbonates, alkaline earth metal hydroxides, alkaline earth metal carbonates, alkali metal oxides, alkaline earth metal oxides, alkali metal silicates, alkaline earth metal silicates, ammonia and alkali metal aluminates or aqueous solutions or mixtures of said bases.

**20.** Process according to any one of Claims 8-19, **characterized in that** the mixing of the hydrophobicizer with the precipitated silica in step f) takes place by adding the hydrophobicizer to a precipitated silica having a water content of 1.0 to 80% by weight.

**21.** Process according to any one of Claims 8-19, **characterized in that** the mixing of the hydrophobicizer with the precipitated silica in step f) takes place by adding the hydrophobicizer to a precipitated silica having a water content of 70 to 99% by weight.

**22.** Process according to any one of Claims 8-19, **characterized in that** the mixing of the hydrophobicizer with the precipitated silica in step f) takes place by simultaneously passing the hydrophobicizer and the precipitated silica into a spin-flash dryer.

**23.** Process according to any one of Claims 8-19, **characterized in that** the mixing of the hydrophobicizer with the precipitated silica in step f) takes place by adding the hydrophobicizer to a suspension or dispersion of the precipitated silica.

**24.** Process according to any one of Claims 8-19, **characterized in that** the mixing of the hydrophobicizer with the precipitated silica in step f) takes place by mixing a precipitated silica, dried beforehand, with the hydrophobicizer.

**25.** Process according to any one of Claims 20 to 24, **characterized in that** the hydrophobicizer is mixed with a precipitated silica which has already been alkalified.

**26.** Process according to any one of Claims 20 to 24, **characterized in that** the alkalification in step e) takes place after the hydrophobicizer has been mixed with the precipitated silica.

**27.** Process according to any one of Claims 8 to 26, **characterized in that** organopolysiloxane derivatives or silicon compounds which react to organopolysiloxanes under the chosen reaction conditions are used as hydrophobicizers.

**28.** Process according to any one of Claims 8 to 27, **characterized in that** precipitated silica coated with the hydrophobicizer, or the mixture of the precipitated silica with the hydrophobicizer, is subjected to a step
g) conditioning at 10 to 150°C for a period of 0.5 to 72 h,

**29.** Process according to Claim 28, **characterized in that** conditioning takes place at 100 to 150° for a period of 0.5 to 2 hours.

30. Process according to any one of Claims 8 to 29, **characterized in that** step g) is followed by step h).

31. Process according to any one of Claims 8 to 30, **characterized in that** the mixing of the hydrophobicizer with the precipitated silica in step f) takes place by mixing an already conditioned precipitated silica obtained after step g) with a hydrophilic precipitated silica.

32. Process according to Claim 31, **characterized in that** a conditioned precipitated silica after step g) is mixed with a filtercake or suspension or dispersion of the hydrophilic precipitated silica.

33. Process according to any one of Claims to 32, **characterized in that** one of process steps f), g) and h) is carried out repeatedly in succession.

34. Process according to any one of Claims 8 to 32, **characterized in that** process steps f) and h) are carried out repeatedly in succession.

35. Process according to any one of Claims 8 to 32, **characterized in that** process steps f), g) and h) are carried out repeatedly in succession.

36. Use of hydrophobic precipitated silica according to any one of Claims 1-7 in a defoamer formulation.

37. Use of hydrophobic precipitated silica according to any one of Claims 1-7 in a silicone rubber as a reinforcing filler.

38. Use of hydrophobic precipitated silica according to any one of Claims 1-7 in an HTV silicone rubber as a lightening additive in peroxidically crosslinking systems.

39. Use of hydrophobic precipitated silica according to any one of Claims 1-7 as a flow assistant.

40. Use of hydrophobic precipitated silica according to any one of Claims 1-7 as a carrier.

41. Use of hydrophobic precipitated silica according to any one of Claims 1-7 in the antiblocking area.

**Revendications**

1. Silices précipitées hydrophobes, **caractérisées par**

| | |
|---|---|
| BET | < 110 $m^2/g$ |
| CTAB | < 150 $m^2/g$ |
| rapport BET/CTAB | < 3 |
| teneur en carbone | > 3,1% |
| pH | > 9. |

2. Silices précipitées hydrophobes selon la revendication 1, **caractérisées en ce qu'**elles présentent un pH entre 9 et 10,5.

3. Silices précipitées hydrophobes selon la revendication 1 ou 2, **caractérisées en ce qu'**elles présentent un DBP < 230 g/(100 g).

4. Silices précipitées hydrophobes selon l'une quelconque des revendications précédentes, **caractérisées en ce que** l'indice de Sears modifié est inférieur à 6 ml/(5 g).

5. Silice précipitée hydrophobe selon l'une quelconque des revendications précédentes, **caractérisée en ce qu'**elle présente une densité de groupes silanol, c'est-à-dire un rapport d'indice de Sears modifié à BET inférieur à 0,05 ml/ (5 $m^2$).

6. Silice précipitée hydrophobe selon l'une quelconque des revendications précédentes, **caractérisée en ce qu'**elle

présente une mouillabilité par le méthanol supérieure à 50%.

7. Silice précipitée hydrophobe selon l'une quelconque des revendications précédentes, **caractérisée en ce qu'**elle présente une grosseur moyenne des particules $d_{50}$ inférieure à 14 μm.

8. Procédé de préparation de silices précipitées hydrophobes, comprenant les étapes

   a) précipitation d'une silice précipitée,
   b) filtration,
   c) fluidification du gâteau de filtre par addition d'eau,
   d) séchage de la suspension,
   h) réalisation d'un traitement thermique à plus de 150°C et
   i) broyage de la silice hydrophobe précipitée,
   **caractérisé en ce qu'**on réalise
   une étape
   e) alcalinisation de la silice précipitée par addition d'au moins un agent basique
   et que la silice précipitée est revêtue dans l'étape
   f) préparation d'un mélange constitué par au moins un agent d'hydrofugation et une silice précipitée, une dispersion de silice précipitée ou un gâteau de filtre de silice précipitée

   par un agent d'hydrofugation.

9. Procédé selon la revendication 8, **caractérisé en ce que** l'étape a) est réalisée par les sous-étapes suivantes :

   aa) chauffage d'une charge préalable d'eau ou d'eau mélangée avec du verre soluble à une température entre 60 et 100°C, de préférence entre 70 et 90°C
   ab) addition simultanée de verre soluble et d'acide dans la charge préalable
   ac) diminution du pH par addition d'un agent acidifiant.

10. Procédé selon la revendication 9, **caractérisé en ce qu'**on réalise après l'étape ac) l'étape
    ad) maturation de la suspension de précipitation à 10°C jusqu'à 95°C, de préférence à 40°C jusqu'à 60°C, pendant 0 à 72 heures, de préférence pendant 0 à 12 heures.

11. Procédé selon l'une quelconque des revendications 9 - 10, **caractérisé en ce que** le pH dans l'étape ab) est maintenu à une valeur entre 7 et 11.

12. Procédé selon l'une quelconque des revendications 9 - 11, **caractérisé en ce que** la température de la solution réactionnelle dans l'étape ab) est maintenue à une valeur entre 60 et 100°C.

13. Procédé selon l'une quelconque des revendications 9 - 12, **caractérisé en ce que** l'addition simultanée de verre soluble et d'agent acidifiant est continuée jusqu'à une concentration en solides de 40 à 70 g/l, puis est arrêtée.

14. Procédé selon l'une quelconque des revendications 9 - 13, **caractérisé en ce que** le pH dans l'étape ac) est réglé à 2 jusqu'à 8 par addition d'un agent acidifiant.

15. Procédé selon l'une quelconque des revendications 8 - 14, **caractérisé en ce que** l'étape e) est réalisée simultanément avec l'étape c).

16. Procédé selon l'une quelconque des revendications 8 - 14, **caractérisé en ce que** l'étape e) est réalisée après l'étape c) mais avant l'étape d).

17. Procédé selon l'une quelconque des revendications 8 - 14, **caractérisé en ce que** l'étape e) est réalisée après l'étape d).

18. Procédé selon l'une quelconque des revendications 8 - 17, **caractérisé en ce que** le pH de la silice précipitée ou de la suspension dans l'étape
    e) est réglé à 7 jusqu'à 11 par addition de l'agent basique.

**19.** Procédé selon l'une quelconque des revendications 8 - 18, **caractérisé en ce que** l'agent basique est choisi dans le groupe constitué par les hydroxydes de métal alcalin, les carbonates de métal alcalin, les hydroxydes de métal alcalino-terreux, les carbonates de métal alcalino-terreux, les oxydes de métal alcalin, les oxydes de métal alcalina-terreux, les silicates de métal alcalin, les silicates de métal alcalino-terreux, l'ammoniaque et les aluminates de métal alcalin ou des solutions aqueuses ou des mélanges desdites bases.

**20.** Procédé selon l'une quelconque des revendications 8 - 19, **caractérisé en ce que** le mélange de l'agent d'hydrofugation avec la silice précipitée dans l'étape f) est réalisé de telle manière que l'agent d'hydrofugation est ajouté à une silice précipitée avec une teneur en eau de 1,0 à 80% en poids.

**21.** Procédé selon l'une quelconque des revendications 8 - 19, **caractérisé en ce que** le mélange de l'agent d'hydrofugation avec la silice précipitée dans l'étape f) est réalisé de telle manière que l'agent d'hydrofugation est ajouté à une silice précipitée avec une teneur en eau de 70 à 99% en poids.

**22.** Procédé selon l'une quelconque des revendications 8 - 19, **caractérisé en ce que** le mélange de l'agent d'hydrofugation avec la silice précipitée dans l'étape f) est réalisé par addition simultanée de l'agent d'hydrofugation et de la silice précipitée dans un sécheur spin-flash.

**23.** Procédé selon l'une quelconque des revendications 8 - 19, **caractérisé en ce que** le mélange de l'agent d'hydrofugation avec la silice précipitée dans l'étape f) est réalisé par addition de l'agent d'hydrofugation dans une suspension ou une dispersion de la silice précipitée.

**24.** Procédé selon l'une quelconque des revendications 8 - 19, **caractérisé en ce que** le mélange de l'agent d'hydrofugation avec la silice précipitée dans l'étape f) est réalisé par mélange d'une silice précipitée séchée au préalable avec l'agent d'hydrofugation.

**25.** Procédé selon l'une quelconque des revendications 20 à 24, **caractérisé en ce que** l'agent d'hydrofugation est mélangé avec une silice précipitée déjà rendue alcaline.

**26.** Procédé selon l'une quelconque des revendications 20 à 24, **caractérisé en ce que** l'alcalinisation dans l'étape e) est réalisée après mélange de l'agent d'hydrofugation avec la silice précipitée.

**27.** Procédé selon l'une quelconque des revendications 8 à 26, **caractérisé en ce qu'**on utilise comme agent d'hydrofugation des dérivés d'organopolysiloxane ou des composés siliciés qui réagissent dans les conditions de réaction choisies en formant des organopolysiloxanes.

**28.** Procédé selon l'une quelconque des revendications 8 à 27, **caractérisé en ce que** la silice précipitée revêtue de l'agent d'hydrofugation ou le mélange de la silice précipitée avec l'agent d'hydrofugation est soumis(e) à une étape g) conditionnement à 10 jusqu'à 150°C pendant un laps de temps de 0,5 à 72 h.

**29.** Procédé selon la revendication 28, **caractérisé en ce que** le conditionnement est réalisé à 100 jusqu'à 150°C pendant un laps de temps de 0,5 à 2 heures.

**30.** Procédé selon l'une quelconque des revendications 8 à 29, **caractérisé en ce que** l'étape g) est suivie de l'étape h).

**31.** Procédé selon l'une quelconque des revendications 8 à 30, **caractérisé en ce que** le mélange de l'agent d'hydrofugation avec la silice précipitée dans l'étape f) est réalisé par mélange d'une silice précipitée déjà conditionnée obtenue après l'étape g) avec une silice précipitée hydrophile.

**32.** Procédé selon la revendication 31, **caractérisé en ce qu'**une silice précipitée conditionnée selon l'étape g) est mélangée avec un gâteau de filtre ou une suspension ou une dispersion de la silice précipitée hydrophile.

**33.** Procédé selon l'une quelconque des revendications 8 à 32, **caractérisé en ce qu'**une des étapes de procédé f), g) et h) est réalisée plusieurs fois l'une après l'autre.

**34.** Procédé selon l'une quelconque des revendications 8 à 32, **caractérisé en ce que** les étapes de procédé f) et h) sont réalisées plusieurs fois l'une après l'autre.

35. Procédé selon l'une quelconque des revendications 8 à 32, **caractérisé en ce que** les étapes de procédé f), g) et h) sont réalisées plusieurs fois les unes après les autres.

36. Utilisation de la silice précipitée hydrophobe selon l'une quelconque des revendications 1 - 7 dans des formulations d'antimousses.

37. Utilisation de la silice précipitée hydrophobe selon l'une quelconque des revendications 1 - 7 dans du caoutchouc de silicone comme charge renforçante.

38. Utilisation de la silice précipitée hydrophobe selon l'une quelconque des revendications 1 - 7 dans du caoutchouc de silicone HTV (durcissant à température élevée) comme additif éclaircissant dans des systèmes réticulant par un peroxyde.

39. Utilisation de la silice précipitée hydrophobe selon l'une quelconque des revendications 1 - 7 comme adjuvant d'écoulement.

40. Utilisation de la silice précipitée hydrophobe selon l'une quelconque des revendications 1 - 7 comme support.

41. Utilisation de la silice précipitée hydrophobe selon l'une quelconque des revendications 1 - 7 dans le domaine de l'anti-adhérence.

CONTIFOAM - Apparatur

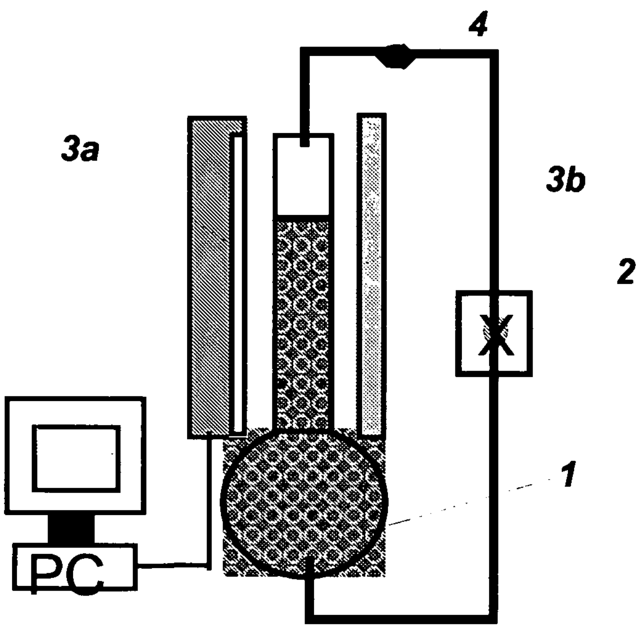


Abbildung 1

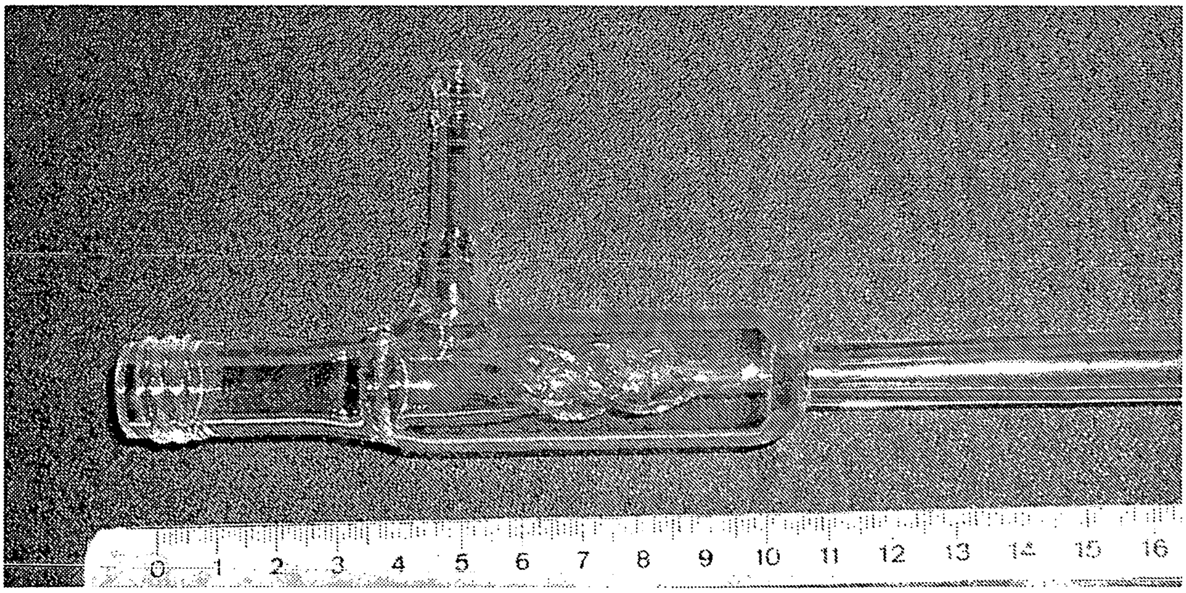

Abbildung 2

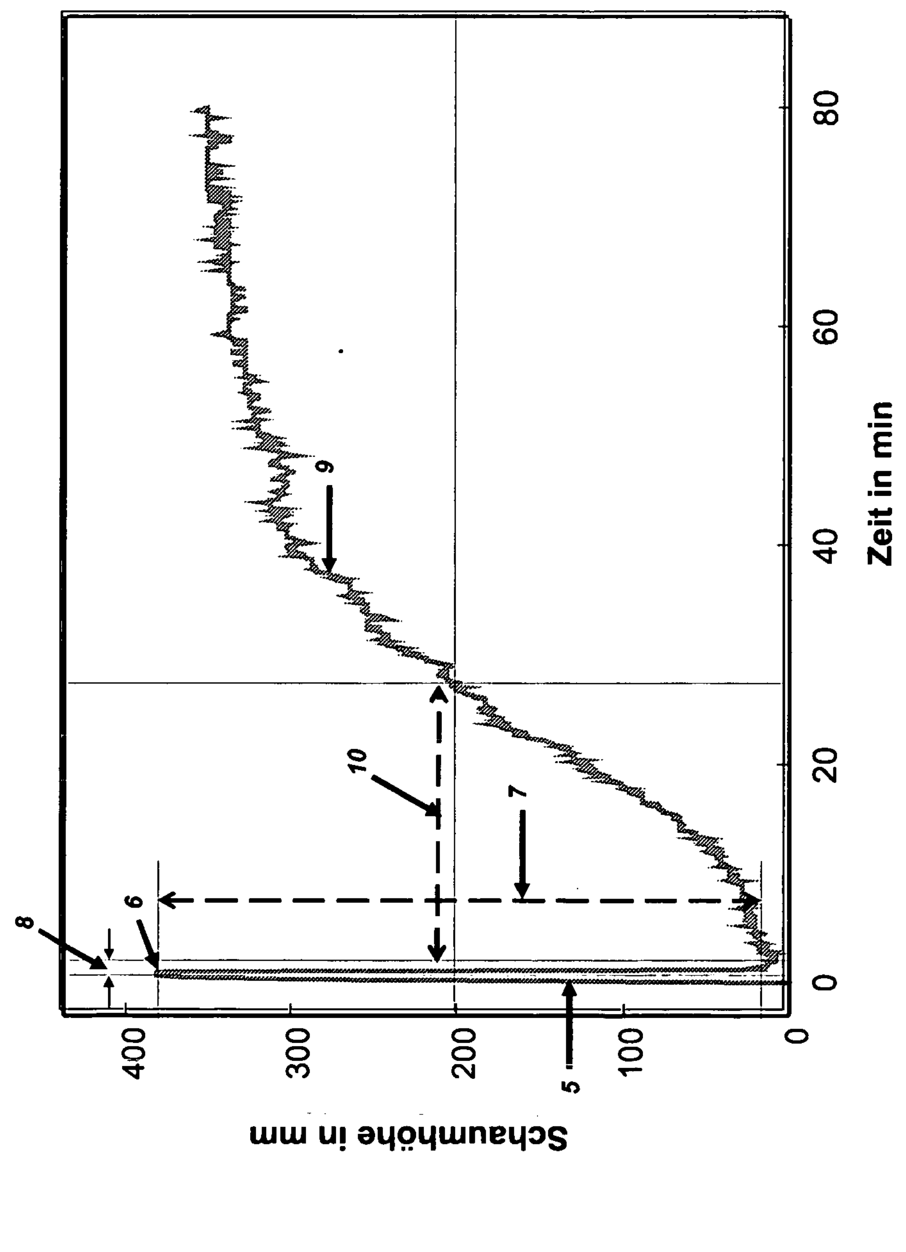
Schaumhöhe in mm
0
100
200
300
400
Zeit in min
0
20
40
60
80
5
6
7
8
9
10

Abbildung 3

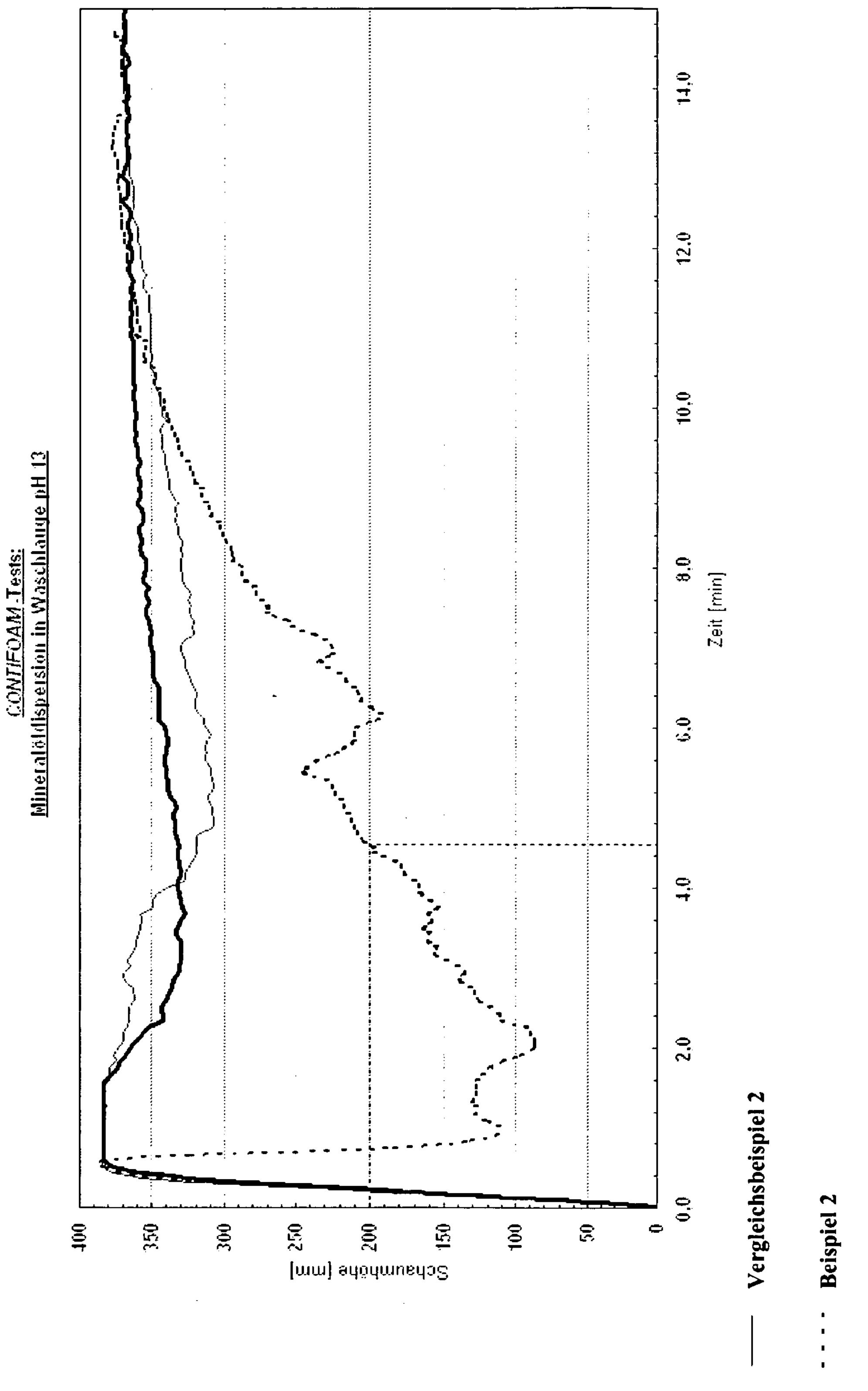
CONTIFOAM-Tests:
Mineralöldispersion in Waschlauge pH 13
Schaumhöhe [mm]
400
350
300
250
200
150
100
50
0
0,0
2,0
4,0
6,0
8,0
10,0
12,0
14,0
Zeit [min]
Vergleichsbeispiel 2
Beispiel 2
Vergleichsbeispiel 1

**Abbildung 4**

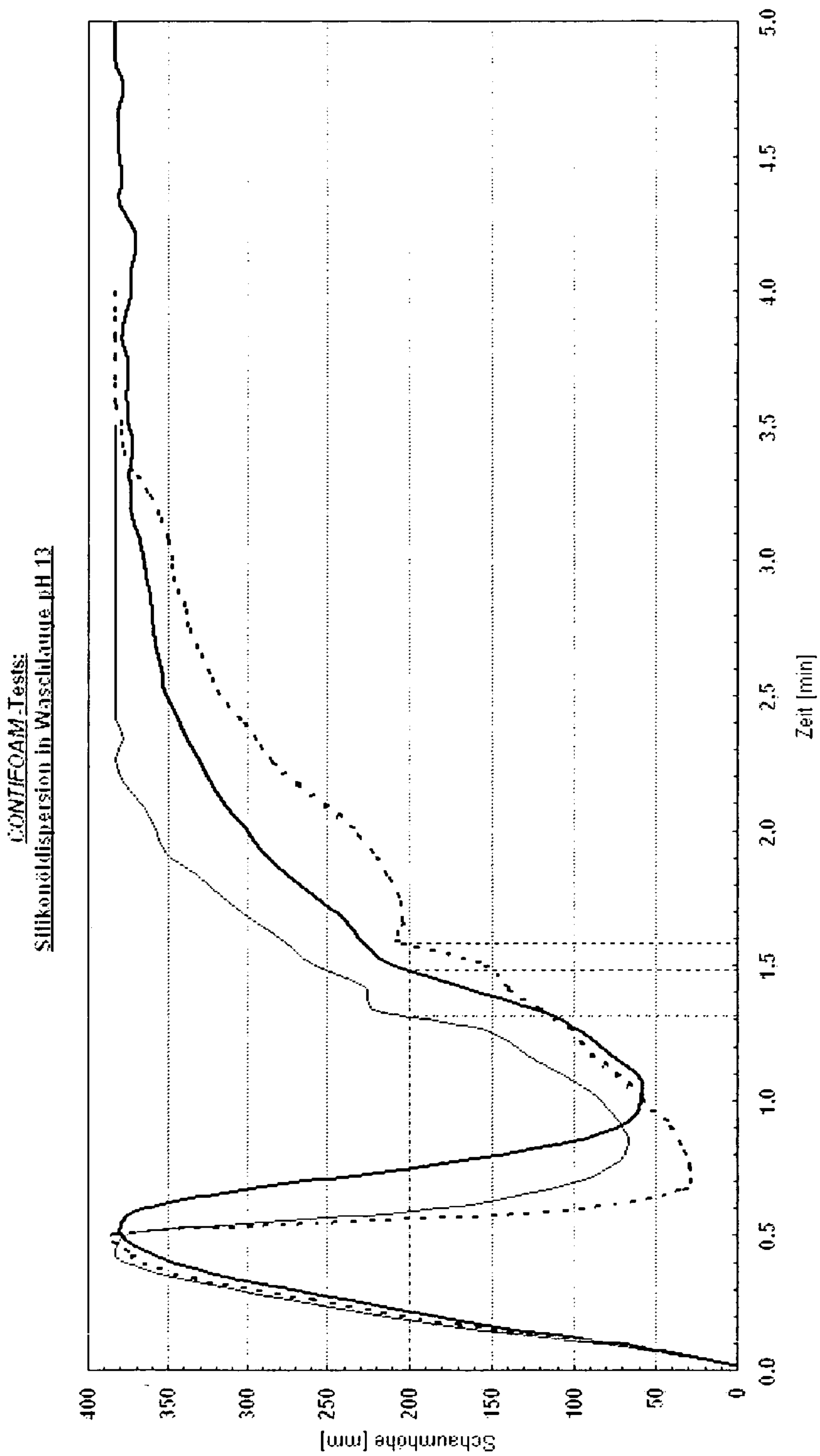


Vergleichsbeispiel 2

Beispiel 2

Vergleichsbeispiel 1

Abbildung 5